(19) Europäisches Patentamt
European Patent Office
Office européen des brevets

(11) Publication number: 0 200 370 B1

(12) EUROPEAN PATENT SPECIFICATION

(45) Date of publication of patent specification: 13.06.90

(51) Int. Cl.$^5$: G 11 B 20/10

(21) Application number: 86302388.3

(22) Date of filing: 01.04.86

# (54) Digital signal reproducing circuit.

(30) Priority: 30.03.85 JP 66890/85
30.03.85 JP 66891/85
30.03.85 JP 66893/85

(43) Date of publication of application:
05.11.86 Bulletin 86/45

(45) Publication of the grant of the patent:
13.06.90 Bulletin 90/24

(84) Designated Contracting States:
DE FR GB NL

(56) References cited:
EP-A-0 096 106
EP-A-0 098 349
FR-A-2 509 890
GB-A-2 109 203

(73) Proprietor: KABUSHIKI KAISHA TOSHIBA
72, Horikawa-cho Saiwai-ku
Kawasaki-shi Kanagawa-ken 210 (JP)

(73) Proprietor: TOSHIBA AUDIO VIDEO ENGINEERING CO., LTD.
3-9-9, Shinbashi 3-chome Minato-ku
Tokyo (JP)

(72) Inventor: Kobata, Hiroshi Patent Division
Toshiba Corp.
Principal Office 1-1, Shibaura 1-chome
Minato-ku Tokyo (JP)
Inventor: Kojima, Tadashi Patent Division
Toshiba Corp.
Principal Office 1-1, Shibaura 1-chome
Minato-ku Tokyo (JP)

(74) Representative: Muir, Ian R. et al
HASELTINE LAKE & CO. Hazlitt House 28
Southampton Buildings Chancery Lane
London WC2A 1AT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 200 370 B1

## Description

This invention relates to a digital signal reproducing circuit that is applicable to digital audio disc playback systems, tape-record information playback systems, digital data processing systems, etc., and more particularly, it relates to a circuit for reproducing digital signals which are encoded according to the predetermined format for the minimum or maximum pulse inversion period and clock signals from the reproduced or received digital signals. Such a circuit is e.g. known from EP—A—96106.

In recent years, digital signal reproducing circuits have been used in a variety of digital systems. In such digital systems, the digital signals are modulated, recorded or transmitted by a variety of digital modulation systems.

Digital signals modulated by these digital modulation systems are predetermined without failure by their digital modulation systems for their minimum inversion period and maximum inversion period format. The circuit to reproduce the correct data as clock signal from these modulated digital signals has the data slice section, phase synchronization loop circuit section and digital signal reproducing section.

This phase synchronization loop circuit section reproduces the clock signal (PLCK), and the digital signal reproducing section reads out the digital signal from the input digital signal, using this clock signal (PLCK). Below, as an example, the digital signal reproducing circuit will be explained taking the case of its use in digital audio disc players.

In the optical disc 11 in Fig. 1 the digital signal is recorded. From this optical disc 11 the signal (RF) is read out using a pickup, this signal (RF) is converted into binary form by the wave-shaping circuit 13, and the clock signal (PLCK) and EFM modulated digital signal (DOUT) are reproduced from this binary signal (DRF) by means of the PLL circuit section 14 and digital signal reproducing circuit 15. Both the clock signal (PLCK) and digital signal (DOUT) are synchronized, and fed to the demodulation circuit (not illustrated).

In Fig. 1, as the signal (RF) read out by the pickup 12 becomes the signal passing through the finite band line, the signal DC level varies by the signal drop-out due to flaws in optical disc 11 and low pass component of the signal itself. This is also similar in a digital data processing system. Because the digital data passes through the frequency non-linear area in the system.

The wave-shaping circuit 13 is to convert this RF signal into the binary signal (DRF).

A variety of wave-shaping circuits are known, but it is difficult to set optimally the DC reference voltage to produce the binary signal used in this circuit. In case the RF signal is compared with a DC reference voltage that is not the optimum value, the error between the optimum DC reference voltage and the actual DC reference is converted into the phase error. Fig. 2 shows the phase relation among binary signals DRF-a, DRF-b and DRF-c obtained when the DC reference voltage varies as a, b and c. The DRF-a indicates the output waveform when the actual DC reference voltage becomes higher than the optimum DC reference voltage. This output waveform (DRF-a) leading edge is delayed, and the trailing edge is advanced.

The delay and advance of this leading edge do not exert a bad influence upon the PLCK in the PLL circuit section. Because this delay and advance are erased, the phase error signal to control VCO is not generated. However, there is a defect that there is not sufficient phase margin. In case the actual DC reference voltage is the optimum DC reference voltage (DRF-b), the phases are in order at the trailing edge of PLCK and at the leading edge of DRF-b, and DRF-b is read out at the later leading edge of PLCK. In this state, it is known that the maximum permissible phase margin is of $\pm\pi$. On the one hand, in the state of DRF-c, the phase margin of one side only has $\pi/2$, and in the event that a phase error of more than $\pi/2$, is produced, a bad influence is exerted upon the reproduction of PLCK.

The present invention seeks to provide a digital signal reproducing circuit which can be stably used even with variations in the phase of input signal.

The present invention seeks further to provide a circuit to reproduce the clock signal and digital signal, without exerting an influence of phase error generated by the vertical error of input signal or DC reference voltage of wave-shaping circuit.

The present invention seeks further to provide a circuit to detect the phase error of digital signal, and correct it to the proper digital signal by the digital signal processing.

According to a first aspect of the present invention, there is provided a digital signal reproducing circuit comprising:

a wave-shaping circuit for converting high-frequency signals comprising digital signals modulated by the predetermined modulation system into binary signals;

a phase locked loop circuit means for generating a bit synchronizing clock synchronised in phase to the leading edge of said binary signal produced by said wave-shaping circuit; and

data processor means for producing digital signals from said binary signal udner control of said bit synchronizing clock generated by said phase locked loop circuit means;

characterised in that said digital signal reproducing circuit further comprises:

first and second frequency divider means, first and second pattern detector means, synchronization means and a timing signal generation means, and wherein:

said phase locked loop circuit means include a first phase locked loop circuit means for generating a first bit synchronizing clock synchronized in phase to the leading edge of said binary signal and leading edge detection data synchronized to said first bit synchronizing clock, and a second phase locked loop circuit means for generating a second bit synchronizing clock synchronized in phase to the trailing edge of said binary signal and trailing edge detection data synchronized to said second bit synchronizing clock;

said first and second frequency divider means respectively divide said first and second bit synchronizing clocks;

said first and second pattern detector means respectively detect signal patterns specified in said binary signal;

said synchronization means synchronize the output of said first and second frequency divider means after the signal patterns are detected by said first pattern detector means or said second pattern detector means;

data from the second frequency divider are latched by a first latch circuit at a trailing edge thereof;

the first frequency divider is set by the latch circuit when the pattern detector detects a predetermined interval between two leading edges of the binay signal;

said timing signal generation means detect the phase difference of each output of said first and second frequency divider means after synchronization by said synchronization means and generate timing signals on the basis of the phase difference and said second data signal;

the relationship between the data conents of the latch circuit and the first frequency divider defines the sampling time of data to be reproduced by controlling a gate circuit; and

said data processing means produce digital signals corrected by said timing signal and said first data signal.

According to a second aspect of the present invention, there is provided a digital signal reproducing circuit comprising:

a wave-shaping circuit for converting high-frequency signals comprising digital signals modulated by the predetermined modulation system into binary signals;

phase locked loop circuit means for generating a bit synchronizing clock synchronized in phase to the leading edge of said binary signal produced by said wave-shaping circuit; and

data processor means for producing digital signals from said binary signal under control of said bit synchronizing clock generated by said phase locked loop circuit means;

characterised in that said digital signal reproducing circuit further comprises:

first and second frequency divider means, a pattern detector means, a synchronization means and a timing signal generation means, and wherein:

said phase locked loop circuit means includes a first phase locked loop circuit means for generating a first bit synchronizing clock synchronized in phase to the leading edge of said binary signal and leading edge detection data synchronized to said first bit synchronizing clock, and a second phase locked loop circuit means for generating a second bit synchronizing clock synchronized in phase to the trailing edge of said binary signal and trailing edge detection data synchronized to said second bit synchronized clock;

said first and second frequency divider means respectively divide said first and second bit synchronizing clocks;

said pattern detector means detect signal patterns specified in said binary signal;

said synchronization means synchronize the output of said first and second frequency divider means after the signal patterns are detected by said pattern detector means;

data from the second frequency divider are latched by a latch circuit at a trailing edge thereof;

the first frequency divider is set by the latch circuit when the pattern detector detects a predetermined interval between two leading edges of the binary signal;

said timing signal generation means detect the phase difference of each output of said first and second frequency divider means after synchronization by means of said synchronization means and generates timing signals on the basis of the phase difference and said second data signal;

the relationship between the data contents of the latch circuit and the first frequency divider defines the sampling time of data to be reproduced by controlling a gate circuit; and

said data processor means produce digital signals corrected by said timing signal and said first data signal.

According to a third aspect of the present invention, there is provided a digital signal reproducing circuit comprising:

a wave-shaping circuit for converting high-frequency signals comprising digital signals modulated by the predetermined modulation system into binary signals;

a phase locked loop circuit means for generating a bit synchronizing clock synchronized in phase to the leading edge of said binary signal produced by said wave-shaping circuit; and

data processor means for producing digital signals from said binary signal under control of said bit synchronizing clock generated by said phase locked loop circuit means;

characterised in that said digital signal reproducing circuit further comprises:

pattern detector means and a phase error detecting means, and wherein:

said pattern detector means detects a predetermined interval between two leading edges of the input binary signal;

said phase locked loop circuit means includes a phase comparator for comparing in phase said binary signal outputted from said wave-shaping circuit with said bit synchronizing clock at the specified edge timing of said binary signal, an oscillator circuit for generating a master clock on the basis of the output of

said phase comparator and a frequency divider circuit for dividing said master clock and for generating a bit synchronizing clock synchronized with said binary signal;

said phase error detecting means includes a frequency divider and a register and outputs a correction signal for correcting said binary signal after the specified signal pattern detected by said pattern detector means;

said phase error detecting means further includes counter means measuring the time from the last leading edge and the register samples the counter means at the trailing edge of the input binary signal between said leading edges; and

said data processor means includes correcting means, and produces corrected digital signals in response to said timing signal and said first data signal.

Reference will now be made, by way of example only, to the accompanying drawings, in which:

Fig. 1 is a block diagram of a conventional digital signal reproducing circuit;

Fig. 2 is a waveform diagram provided for explanation of the operation of the circuit;

Fig. 3 is a block diagram of a first embodiment of the present invention;

Fig. 4 is a phase locked loop circuit included in the block diagram shown in Fig. 3;

Fig. 5 is a waveform diagram provided for explanation of the operation of the phase locked loop circuit;

Fig. 6 is a waveform diagram provided for explanation of the operation of the present invention;

Fig. 7 is a detailed circuit diagram of the first embodiment shown in Fig. 3;

Figs. 8 and 9 are waveform diagrams provided for explanation of the circuit shown in Fig. 7;

Fig. 10 is a block diagram of a second embodiment of the present invention;

Fig. 11 is a detailed circuit diagram of the second embodiment shown in Fig. 10;

Figs. 12 and 13 are waveform diagrams provided for explanation of the circuit shown in Fig. 11;

Fig. 14 is a block diagram of a third embodiment of the present invention;

Fig. 15 is a detailed circuit diagram of the third embodiment;

Fig. 16 is a flip-flop circuit included in the circuit shown in Fig. 15;

Fig. 17 is a waveform diagram provided for explanation of the circuit shown in Fig. 15; and

Fig. 18 is a detailed circuit diagram of a modification of the third embodiment shown in Fig. 15.

Various other objects, features and attendant advantages of the present invention will be more fully appreciated as the same become better understood from the following detailed description when considered in connection with the accompanying drawings in which like reference characters designate like or corresponding parts throughout the several views and wherein Fig. 3 shows a digital signal reproducing circuit according to a first embodiment of the present invention. In a wave-shaping circuit 16 signals (RF) containing the EFM modulated digital signal are applied. This wave-shaping circuit 16 converts the inputted signals (RF) into binary form. These binary signals (DRF) are fed to the phase locked loop circuits (PLL) 17 and 18. PLL 17 produces the first bit synchronizing clock (H.PLCK) phase synchronized at the leading edge of binary signal (DRF). Further, the PLL 17 produces the data signal A-Da to detect the leading edge of binary signals from the binary signal (DRF) and first bit synchronizing clocks (H.PLCK). The PLL 18 produces the second bit synchronizing clock (L.PLCK) phase synchronized at the trailing edge of binary signal (DRF). Further, this PLL 18 produces the trailing edge detecting data signal B-Da from the binary signal (DRF) and second bit synchronizing clock (L.PLCK). The first and second bit synchronizing clocks are fed to the frequency dividers 19 and 20, respectively. The data signals A-Da and B-Da are fed to the pattern detectors 21 and 22, respectively. The frequency dividers 19 and 20 divide in four the bit synchronizing clock. The outputs of these frequency dividers 19 and 20 are fed to synchronizing circuits 23 and 24, respectively. The pattern detectors 21 and 22 detect the time when the binary signal (DRF) becomes the pattern of twice the minimum inversion period or that of twice the maximum inversion period. In the EFM modulation, that is one of digital modulations, the minimum inversion period of digital signal modulated is of 3T, and its maximum inversion period is of 11T. Here, the T is one cycle of the bit synchronizing clock. The synchronizing circuits 23 and 24 delay the output signals of frequency dividers 19 and 20, respectively, the output signal of synchronizing circuit 23 is fed to the frequency divider 20, and the output signal of synchronizing (or latch) circuit 24 to the frequency divider 19. After detecting the patterns specified by means of the pattern detectors 21 and 22, the frequency dividers 19 and 20 are synchronized. The output signal of frequency divider 19 and the output of synchronizing circuit 24 are fed to the timing signal generator 25. The output signal of this timing signal generator 25 and the data signals A-Da and H.PLCK outputted from the PLL 17 are fed to the data processor 26. This data processor 26 produces digital signals (DOUT) without phase error from these input signals.

Fig. 4 (a) shows the detailed circuit diagram of PLL 17 in Fig. 3. This PLL 17 is composed of a phase comparator 27 to phase compare the binary signal (DRF) and the bit synchronizing clock PLCK, a low pass filter 28 and a VCO 29. This phase comparator 27 is composed of two D type flip-flops an AND gate, an OR gate, a P channel MOS FET and an N channel MOS FET, and outputs the leading edge of binary signal (F) and the phase error singal (P-c) of bit synchronizing clock (PLCK). This phase error signal (P-c) is fed to the VCO 29 through the low pass filter 28. This VCO 29 changes the oscillator frequency of VCO according to the output of low pass filter 28, and outputs the bit synchronizing clock (PLCK). This PLL 17 produces first phase error components of binary signal (DRF) and bit synchronizing clock (PLCK). The proper phase error is an error detected at the trailing point of time of bit synchronizing clock. However, since the reading of binary signal (DRF) is carried out at the rising of bit synchronizing clock (PLCK), the phase difference is produced (P-a) first at the leading point of time of binary signal (DRF) and bit synchronizing clock.

This phase difference signal (P-a) contains off-set components, because the phase difference detection is carried out at the leading point of time of bit synchronizing clock (PLCK).

Therefore, the P-b (1/2 T = +π) that is an off-set component is synthesized to the P-a, and the phase difference signal (P-c) is obtained. After integrating this phase difference signal (P-c) for a fixed time, the proper phase error signal is outputted, and the proper phase difference signal is produced. The operation of such a PLL 17 can be understood well by the waveform diagram in Fig. 5. Moreover, the PLL 18 in Fig. 3 is a circuit similar to that shown in Fig. 4 (a) with the AND gate and OR gate of the PLL substituted as shown in Fig. 4 (b).

Fig. 6 shows the binary signal (DRF) and bit synchronizing clocks (H.PLCK and L.PLCK) in the case where the DC reference voltage of wave-shaping circuit varies as levels a, b and c. In case the DC reference voltage has the level-a, the leading timing phase of binary signal (DRF) is delayed by 1/4 T. As a result, the phase difference of the 2 bit synchronizing clocks (H.PLCK and L.PLCK) produced in the PLL 17 and 18 is 1/2 T. That is to say, a phase difference of twice the phase error of the binary signal (DRF) is generated. Since the proper digital signal generation is impossible as it is, in the first embodiment, the pattern detector, latch circuit and timing signal generator are utilized.

Fig. 7 shows a detailed circuit for reproducing detail signals to the first embodiment. The PLL 17 is composed of a phase comparator 36 composed of flip-flops 30 and 31, an AND gate 32, and OR gate 33, a P channel MOS gate 34 and an N channel MOS gate 35, a low pass filter 37 and a VCO 38. The PLL 18 is composed of a phase comparator 45 composed of flip-flops 39 and 40, a NOR gate 41, a NAND gate 42, a P channel MOS gate 43 and an N channel MOS gate 44, a low pass filter 46 and a VCO 47. The frequency divider 19 is composed of flip-flops 48 and 49 and gate circuits 50 and 51. The frequency divider 20 is composed of flip-flops 52 and 53 and gate circuits 54 and 55. The pattern detector 21 is composed of a counter 56, a NOR gate 57 and an AND gate 58. The pattern detector 22 is composed of a counter 59, a NOR gate 60 and an AND gate 61. The synchronizing circuit 23 is composed of flip-flops 62 and 63, and the synchronizing circuit 24 is composed of flip-flops 64 and 65. The timing signal generator 25 is composed of a flip-flop 66 and a gate circuit 67. The data reproducing circuit 26 is composed of flip-flops 68, 69, 70 and 71.

In this detailed embodiment the synchronization means contains synchronizing circuits 23 and 24 and gate circuits 50, 51, 54 and 55.

Below the operational explanation of this embodiment is made referring to the waveform diagrams shown in Figs. 8 and 9. Fig. 8 is a waveform diagram of this circuit in case the DC reference voltage of wave-shaping circuit 16 is high as indicated by level a in Fig. 6. Fig. 9 is a waveform diagram of this circuit in case the DC reference voltage of wave-shaping circuit 16 is low as indicated by level c in Fig. 6.

Binary signals (DRF) are transmitted to the PLL17 and PLL18. In the PLL17 the bit synchronizing clock (H.PLCK) synchronized to the leading edge of binary signal (DRF) is produced, the output of NOR gate 57, that is the NOR signal of the $\overline{Q}$ output of flip-flop 30 and Q output of flip-flop 31, is fed to synchronous clear terminal of counter 56, and as the result this counter 56 is cleared. In the PLL 18 the bit synchronizing clock (L.PLCK) synchronized to the trailing edge of binary signal (DRF) is produced, the output of NOR gate 60, that is the NOR signal of the Q output of flip-flop 39 and $\overline{Q}$ output of flip-flop 40, is fed to the synchronous clear terminal of counter 59, and as the result this counter 59 is cleared. The pattern detector 21 is to measure the spacing between leading edges of binary signal (DRF), and the pattern detector 22 is to measure the spacing between trailing edges of binary signal (DRF). And in the case of this embodiment, the counter 56 detects the spacing 6 T between leading edges (the T is one cycle of bit synchronizing clock), and the counter 59 detects that the spacing between trailing edges is of 6 T. This 6T is two times 3 T, which is the minimum inversion period of EFM modulation, the minimum inversion period being the minimum spacing in a variety of spacing from the leading edge till the trailing edge or from the trailing edge till the leading edge of binary signal (DRF), and the minimum inversion spacing of EFM modulation being 3 T. The fact that 6 T is detected with this counter 56 means that the binary signal (DRF) inputs continuously 3 T and 3 T, and this binary signal (DRF) shall be inverted just at the center of 6 T. Because the fact that the spacing between leading edges of binary signal is of T means that the binary signal (DRF) is of 111000, and no combination other than this exists. As the minimum inversion period is of 3 T, 2 T + 4 T and 5 T + 1 T cannot be found.

The frequency dividers 19 and 20 divide into 4 the H.PLCK and L.PLCK, respectively. The output state of flip-flops 48 and 49 of frequency divider 19 is latched to the synchronizing circuit 23 at the time of phase comparison timing that is the leading point of time of H.PLCK after change of binary signal (DRF). The output state of flip-flops 52 and 53 of frequency divider 20 is latched to the latch circuit at the time of phase comparison timing that is the leading point of time of L.PLCK, signal (DRF). At the time of this state, if the content of counter 56 becomes 5, as well the output of NOR gate 57 "1", the output of AND gate 58 becomes "1". The output of this AND gate 58 is the output of pattern detector 17. At this time, the content of synchronizing circuit 24 is preset to the frequency divider 19.

Similarly, if the content of counter 59 becomes 5, as well the output of NOR gate 60 becomes "1", the output of AND gate 62 becomes "1". At this time, the content of synchronizing circuit 23 is preset to the frequency divider 20. By this operation, both frequency dividers are synchronized. When the spacing between edges in the same direction is of 6 T, they are mutually synchronized in bit unit with the opposite side. The operation of this synchronization will be described in more detail below.

The fact that in this circuit the output of AND gate that is the output of pattern detector is generated means that the leading edge of binary signal (DRF) is also inputted at the point of time only before 6 T from this time. The modulation system used in this embodiment is the EFM modulation, and the minimum inversion period of this modulation system is 3 T. Therefore, the trailing edge of binary signal (DRF) before the point of time that the output of AND gate 58 is generated shall be generated properly before 3 T than the point of time that the output of AND gate 58 is generated. If the leading edge of this binary signal (DRF) is generated before 2 T or 4 T than the period of time that the output of AND gate 58 is generated, this is due to an RF signal level variation or a DC reference voltage error. Granted that the trailing edge of binary signal (DRF) is, as first DRF signal in Fig. 8, generated more than approximately 4 T before the point of time that the output of AND gate 58 is generated, in a proper way, this trailing edge shall be generated at the center between two leading edges of binary signal (DRF).

A time lag of 1 T is generated from the timing of the leading edge of output pulse of AND gate 58 until the data are set to the flip-flops 48 and 49. Therefore, in terms of the data processing, the time spacing between the leading edge generating point of time of binary signal and the next leading edge seen by the output of frequency divider is 4 T.

Since the frequency divider divides into 4 the bit synchronizing clock (1 cycle is of 1 T), the time difference of 4 T is therefore the time of 1 cycle of frequency divider. Therefore, the data of the two series are synchronized, by setting the data latched to the flip-flops 64 and 65 to the flip-flops 48 and 49 at the trailing edge timing of AND gate 58.

Then, the time base of digital signal is properly corrected. When making the PLL side to phase compare at the leading edge of DRF like the circuit shown in Fig. 7 as standard of output, the trailing edge of DRF delays as shown in Fig. 8 or advances as shown in Fig. 9. Therefore, in order to correct the trailing edge by ± 2 T making the leading edge of DRF as standard, it is necessary to delay the binary signal (DRF) in the portion of 2 T, and process it. In case the trailing edge advances against the leading edge, it is enough to simply delay the trailing edge in the portion of phase error, while in case the trailing edge is delayed, this cannot be advanced. Therefore, by delaying 2 T in advance the leading edge, even if it is delayed 2 T, the data can be corrected. Since the data of frequency dividers 19 and 20 are synchronized, when each Q output of flip-flops 52 and 53 is of "1.0", it is set so that each Q output of flip-flops 48 and 49 becomes "0.1".

Because the leading edge side delays in the portion of 2 T, the leading edge output timing is the timing delayed in the portion of 2 T at the point of time that the data of flip-flops 64 and 65 agree with the data of flip-flops 48 and 49. In other words, compared with the flip-flops 64 and 65, the outputs of flip-flop 48 and 49 are set at a timing delayed by two bits. This relation is shown in the following table.

| 65—Q | 64—Q | * | 48—Q | 49—Q |
|---|---|---|---|---|
| 0 | 0 | * | 1 | 1 |
| 1 | 0 | * | 0 | 1 |
| 1 | 1 | * | 0 | 0 |
| 0 | 1 | * | 1 | 0 |

Then, each Q output of flip-flops 69 and 70 is fed to the flip-flop 71, and the digital signal corrected and made with bit synchronization from the Q of this flip-flop is outputted.

In Figs. 8 and 9 errors are produced in the first D OUT because this is the state before being synchronized.

In the embodiment above described the signal made with EFM modulation is used, however, if it is a question of the signal modulated by the digital modulation system that the minimum inversion period or the maximum inversion period is determined, any signal may be convenient. Moreover, the pattern detector in this embodiment may be changed so as to detect 2 times the maximum inversion period.

Concerning the digital signal reproducing circuit above described, its RF signal level variation and the DC reference voltage variation do not exert an influence on the phase comparison range. Furthermore, since the phase error by DC reference voltage variation can be corrected it is a circuit of extremely high performance. In other words, there is no need to enhance the DC reference voltage regulation capacity in the wave-shaping circuit, and it becomes possible to perform the digital processing by changing the vertical error of input signal or DC reference voltage of wave-shaping circuit to the time base.

Figs. 10 and 11 show other embodiments of the circuit of the present invention. Most of the elements of this circuit are similar to those found in Figs. 3 and 7, and accordingly have the same numerical designation. In this circuit binary signals made by the wave-shaping circuit 16 are fed to the PLL 17 to be phase synchronized at the leading edge and to the PLL 18 to be phase synchronized at the trailing edge. The pattern detector 21 detects that the spacing between leading edges of binary signal is the specified spacing. After the detection signal is obtained by this pattern detector 21, output signals of frequency divider 19 and frequency divider 20 are synchronized. The timing signal generator 25 and the data reproducing circuit 26 detect the phase error in the binary signal, and produce corrected digital signals. In Fig. 11 the first phase locked circuit means is composed of a phase comparator 36, a low pass filter 37 and a VCO 38, and the second phase locked loop circuit means is composed of a phase comparator 45, a low pass fitler 46 and a VCO 47. The first frequency divider is composed of a flip-flop 48 and a flip-flop 49. The pattern detector circuit is composed of a counter 56, a NOR gate 57 and gate 58. The synchronization means contains a synchronizing circuit 24, a gate circuit 50 and a gate circuit 51. The timing signal generation means is composed of gate circuit 67 and a flip-flop 66, and the data production circuit is composed of flip-flops 68, 69, 70 and 71.

Then, the circuit operation of this second embodiment will be explained referring to Figs. 11, 12 and 13. Fig. 12 is a waveform diagram of this circuit in the case where the DC reference voltage of wave-shaping circuit 16 is high, as shown by a in Fig. 6. Fig. 13 is a waveform diagram of this circuit in case the DC reference voltage of wave-shaping circuit 16 is low as shown by c in Fig. 6.

Binary signals (DRF) are fed to the PLL 17 and PLL 18. In the PLL 17 the bit synchronizing clock (H.PLCK) synchronized to the leading edge of binary signal (DRF) is produced, and the output of NOR gate 57 that is the NOR signal of $\overline{Q}$ output of flip-flop 30 and Q output of flip-flop 31, is fed to the synchronous clear terminal of counter 56, and as the result this counter is cleared. The output of this NOR gate 57 contains also the data signal that is the leading edge information of DRF signal. In the PLL 18 the bit synchronizing clock (L.PLCK) synchronized to the trailing edge of binary signal (DRF) is produced. The Q output of flip-flop 39 stands for the data signal that is the trailing edge information of DRF signal, and fed to the synchronizing circuit 24 and the timing signal generator 25. The pattern detector 21 detects that the spacing between leading edges of binary signal (DRF) is of 6 T. And the signal indicating that 6 T is detected is outputted from the AND gate 58. Two (2) bit synchronizing clocks are divided into 4 by the frequency divider 19 and the frequency divider 20, respectively. Each Q output of flip-flops 52 and 53 in this frequency divider 20 is latched to a latch circuit constituted by flip-flops 64 and 65 in the synchronizing circuit 24 at the phase comparison timing. In this state, then the output of AND gate 58 of pattern detector 21 becomes "1", the data latched to the flip-flops 64 and 65 are preset to the flip-flops 48 and 49. When the output of AND gate 58 becomes "1", it means that the leading edge of binary signal is inputted at the point in time before only 6 T from this time. Further, the trailing edge of binary signal (DRF) to be corrected shall be generated before 3 T from the time that the output of AND gate 58 becomes "1". If delayed only 1 T the timing to preset the latch data of flip-flops 64 and 65 to the flip-flops 48 and 49, the spacing between the trailing edge generation point of time of binary signal and the leading edge expressed in the output of frequency divider coming next becomes 4 T. As the time difference of this 4 T is the time of 1 cycle of the frequency divider, the data of 2 series are synchronized by setting the data latched to the flip-flops 64 and 65 to the flip-flops 48 and 49 at the trailing edge timing of AND gate 58. By this synchronization the timing difference on actual operation between flip-flops 48 and 49 and flip-flops 64 and 65 is to correspond to the phase difference by DC reference voltage level variation.

Also in this embodiment, similarly to the first embodiment described above, since it can be corrected till the phase difference of " 2T of binary signal (DRF), the leading edge of binary signal delays 2 T in advance. For this reason, the input timing of trailing edge is latched. It is enough to make the timing delayed 2 T from the timing that the flip-flops 64 and 65 match with the flip-flops 48 and 49 as timing of trailing edge of binary signal.

When the relation between the flip-flops 64 and 65 and the flip-flops 48 and 49 becomes as shown in the following table, the Q output of flip-flop 70 is generated. When making the timing of pulse center of this flip-flop 70 as trailing edge of binary signal, the phase error described above can be corrected.

| 65—Q | 64—Q | * | 48—Q | 49—Q |
|---|---|---|---|---|
| 0 | 0 | * | 1 | 1 |
| 1 | 0 | * | 0 | 1 |
| 1 | 1 | * | 0 | 0 |
| 0 | 1 | * | 1 | 0 |

Fig. 13 is a waveform diagram when delaying 1.25 T, because the phase of binary signal (DRF) is in error.

Fig. 14 shows a block diagram of third embodiment of the present invention. In a wave-shaping circuit 16, the signal (RF) including the digital signal made with EFM modulation are applied. This wave-shaping circuit 16 converts the input signal (RF) into binary form. The binary signal (DRF) is fed to the phase locked loop circuit (PLL) 81. The PLL 81 produces the bit synchronizing clock (PLCK) phase synchronized by the leading edge of binary signal (DRF). Further, the PLL 81 produces the data signal P-a by the binary signal (DRF) and the bit synchronizing clock (PLCK). The pattern detector 82 detects whether there is the signal pattern of twice the minimum inversion period in the binary signal (DRF) or not, and feeds the output signal to the phase error detector 83 when there is this signal pattern. This phase error detector 83 detects the phase error of binary signal (DRF) that is produced by the DC reference voltage error. This error quantity is fed to the data reproducing circuit 84. The data reproducing circuit 84 corrects the binary signal (DRF) by the time base on the basis of the phase error quantity from the phase error detector 83, synchronizes it, and outputs the digital signal.

Fig. 15 shows a detail circuit diagram of the third embodiment. The PLL 81 is composed of a phase comparator 85, a low pass filter 86, a VCO 87 and a frequency divider 88. The VCO 87 outputs the master clock (MCK) with frequency of 4 times the bit synchronizing clock according to the output of low pass filter 86. The frequency divider 88 divides into 4 the master clock (MCK), and outputs the bit synchronizing clock (PLCK).

The pattern detector 82 is composed of a counter 89, a decoder 90 and an AND gate 91. The phase error detector 83 is composed of frequency dividers 88 and 92, registers 93 and 94 and a NOR gate 103. In this circuit, the frequency divider 88 combinedly uses the frequency divider in the PLL 81. The register 93 sets each output data of flip-flops 95, 96, 97 and 98 at the timing of trailing edge of binary signal (DRF). The register sets the data of resistor 93 after the spacing between leading edges of binary signal becomes 6 T by means of the pattern detector 82. The flip-flops 97 and 98 in this phase error detector 83 are of the circuit configuration shown in Fig. 16.

The data processor 84 is composed of a matrix circuit 99, a register 100, a gate circuit 101 and a flip-flop 102. The relation between the input data and the output data of this matrix circuit 99 is set as shown in the following table. The register 100 and gate circuit 101 convert the binary signal (DRF) into the digital signal corrected, on the basis of the control data outputted from the matrix circuit 99.

The phase comparator 85 outputs the data signal P-a containing the phase difference information from the binary signal (DRF) and bit synchronizing signal. This data signal P-a is shown in Fig. 5. This data signal P-a clears the flip-flops 97 and 98 and counter 89. By the trailing edge of binary signal (DRF) the output data of flip-flops 95, 96, 97 and 98 are set to the register 93.

MATRIX CIRCUIT

| | * Input * | | | | Output | | | | | | | | | | | | |
|---|---|---|---|---|---|---|---|---|---|---|---|---|---|---|---|---|---|
| | A | B | C | D | *G1 | G2 | G3 | G4 | G5 | G6 | G7 | G8 | G9 | G10 | G11 | G12 | G13 |
| −6 | 1 | 0 | 1 | 0 | | | | | | | | | | | | | 1 |
| −5 | 1 | 1 | 1 | 0 | | | | | | | | | | | | 1 | |
| −4 | 0 | 1 | 1 | 0 | | | | | | | | | | | 1 | | |
| −3 | 0 | 0 | 1 | 1 | | | | | | | | | | 1 | | | |
| −2 | 1 | 0 | 1 | 1 | | | | | | | | | 1 | 1 | | | |
| −1 | 1 | 1 | 1 | 1 | | | | | | | | 1 | | | | | |
| 0 | 0 | 1 | 1 | 1 | | | | | | | 1 | | | | | | |
| +1 | 0 | 0 | 0 | 1 | | | | | | 1 | 1 | | | | | | |
| +2 | 1 | 0 | 0 | 1 | | | | | 1 | | 1 | | | | | | |
| +3 | 1 | 1 | 0 | 1 | | | | 1 | | | 1 | | | | | | |
| +4 | 0 | 0 | 0 | 1 | | | 1 | | | | 1 | | | | | | |
| +5 | 1 | 0 | 0 | 1 | | 1 | | | | | 1 | | | | | | |
| +6 | 1 | 1 | 0 | 1 | 1 | | | | | | 1 | | | | | | |

After 6 T after outputted the leading edge of binary signal (DRF), when the leading edge of binary signal (DRF) is outputted from the wave-shaping circuit 16, the output of decoder 90 becomes "1". When the output data of this decoder 90 and the AND output of data signal P-a become "1", the data stored in the register 93 is set to the register 94. The data set to this register 94 expresses the error phase by DC reference voltage error described above. That is to say, in case that the spacing between bipolar edges is of 6 T, the timing of reverse edge shall be generated just at the center (3 T). The matrix circuit 99 outputs the data "0011" stored in the register 94 by converting it into the data for control "00000000001000". The gate circuit 101 and the register 100 produce the binary signal (DRF) and the digital signal corrected from the data for control. And this corrected digital signal is synchronizzed and outputted to the bit synchronizing clock (PLCK) by the flip-flop 102.

The spacing direction value between bipolar edges of binary signal (DRF) in the pattern detector 82 is possible to change this embodiment to detect two times the maximum inversion period in the digital signal to be inputted. Also, this corrected digital signal is synchronized, and outputted to the bit synchronizing clock (PLCK) by the flip-flop 102.

Fig. 18 shows a modification of the third embodiment which carries out the phase comparison timing of binary signal (DRF) and bit synchronizing signal (PLCK) and the timing of trailing edge of binary signal (DRF).

The circuit of Fig. 18 is different from the third embodiment as shown in Fig. 15 in that the inverter 104 is removed from the circuit of Fig. 15 and another inverter 105 is placed between the wave-shaping circuit 16 and the phase comparator 85. The rest of the circuit shown in Fig. 18 is the same as the circuit shown in Fig. 15. Therefore it operates identically with the circuit of Fig. 15.

**Claims**

1. A digital signal reproducing circuit comprising:

a wave-shaping circuit (16) for converting high-frequency signals comprising digital signals modulated by the predetermined modulation system into binary signals;

a phase locked loop circuit means (17, 18) for generating a bit synchronizing clock synchronized in phase to the leading edge of said binary signal produced by said wave-shaping circuit (16); and

data processor means (26) for producing digital signals from said binary signal under control of said bit synchronizing clock generated by said phase locked loop circuit means (17, 18);

characterised in that said digital signal reproducing circuit further comprises:

first and second frequency divider means (19, 20), first and second pattern detector means (21, 22), a synchronization means and a timing signal generation means (25), and wherein:

said phase locked loop circuit means (17, 18) include a first phase locked loop circuit means (17) for generating a first bit synchronizing clock synchronized in phase to the leading edge of said binary signal and leading edge detection data synchronized to said first bit synchronizing clock, and a second phase locked loop circuit means (18) for generating a second bit synchronizing clock synchronized in phase to the trailing edge of said binary signal and trailing edge detection data synchronized to said second bit synchronizing clock;

said first and second frequency divider means (19, 20) respectively divide said first and second bit synchronizing clocks;

said first and second pattern detector means (21, 22) respectively detect signal patterns specified in said binary signal;

said synchronization means (23, 24) synchronize the output of said first and second frequency divider means (19, 20) after the signal patterns are detected by said first pattern detector means (21) or said second pattern detector means (22);

data from the second frequency divider (20) are latched by a first latch circuit (24) at a trailing edge thereof;

the first frequency divider (19) is set by the latch circuit when the pattern detector (21) detects a predetermined interval between two leading edges of the binary signal;

said timing signal generation means (25) detect the phase difference of each output of said first and second frequency divider means (19, 20) after synchronization by said synchronization means (23, 24) and generate timing signals on the basis of the phase difference and said second data signal;

the relationship between the data contents of the latch circuit (24) and the first frequency divider (19) defines the sampling time of data to be reproduced by controlling a gate circuit (67); and

said data processing means (26) produce digital signals corrected by said timing signal and said first data signal.

2. A circuit as claimed in claim 1, wherein said first and second frequency divider means (19, 20) divide said first and second bit synchronizing clocks into four, respectively.

3. A circuit as claimed in claim 1 or 2, wherein said first and second pattern detector means (21, 22) detect said signal patterns of two times the minimum inversion period of said binary signal, respectively.

4. A circuit as claimed in claim 1 or 2, wherein said first and second pattern detector means (21, 22) detect said signal patterns of two times the maximum inversion period of said binary signal, respectively.

5. A circuit as claimed in claim 1, wherein said synchronization means (23, 24) include a latch circuit (62, 63, 64, 65) and a gate circuit (50, 51, 54, 55) connected to said first and second frequency divider means (19, 20).

6. A circuit as claimed in claim 5, wherein said synchronization means (23, 24) has a second latch circuit (62, 63) connected to said first frequency divider (19) and the first latch circuit (64, 65) connected to said second frequency divider means (20), the output data of said second latch circuit (62, 63) is preset to said second frequency divider means (20), the output data of said first circuit (64, 65) is preset to said first frequency divider means (62, 63).

7. A digital signal reproducing circuit comprising:

a wave-shaping circuit (16) for converting high-frequency signals comprising digital signals modualted by the predetermined modulation system into binary signals;

phase locked loop circuit means (17, 18) for generating a bit synchronizing clock synchronized in phase to the leading edge of said binary signal produced by said wave-shaping circuit (16); and

data processor means (26) for producing digital signals from said binary signal under control of said bit synchronizing clock generated by said phase locked loop circuit means (17, 18);

characterised in that said digital signal reproducing circuit further comprises:

first and second frequency divider means (19, 20), a pattern detector means (21), a synchronization means (24) and a timing signal generation means (25), and wherein:

said phase locked loop circuit means (17, 18) includes a first phase locked loop circuit means (17) for generating a first bit synchronizing clock synchronized in phase to the leading edge of said binary signal and leading edge detection data synchronized to said first bit synchronizing clock, and a second phase locked loop circuit means (18) for generating a second bit synchronizing clock synchronized in phase to the trailing edge of said binary signal and trailing edge detection data synchronized to said second bit synchronizing clock;

said first and second frequency divider means (19, 20) respectively divide said first and second bit synchronizing clocks;

said pattern detector means (21) detect signal patterns specified in said binary signal;

said synchronization means (24) synchronize the output of said first and second frequency divider means (19, 20) after the signal patterns are detected by said pattern detector means (21);

data from the second frequency divider (20) are latched by a latch circuit at a trailing edge thereof;

the first frequency divider (19) is set by the latch circuit (24) when the pattern detector (21) detects a predetermined interval between two leading edges of the binary signal;

said timing signal generation means (25) detect the phase difference of each output of said first and second frequency divider means (19, 20) after synchronization by means of said synchronization means (23, 24) and generates timing signals on the basis of the phase difference and said second data signal;

the relationship between the data contents of the latch circuit (24) and the first frequency divider (19) defines the sampling time of data to be reproduced by controlling a gate circuit (67); and

said data processor means (26) produce digital signals corrected by said timing signal and said first data signal.

8. A circuit as claimed in claim 7, wherein said first and second frequency divider means (19, 20) divide said first and second bit synchronizing clocks, respectively, by four.

9. A circuit as claimed in claim 7 or 8, wherein said pattern detector means (21) detect signal patterns of two times the minimum inversion period of said binary signal.

10. A circuit as claimed in claim 7 or 8, wherein said pattern detector means (21) detect signal patterns of two times the maxmum inversion period of said binary signal, respectively.

11. A circuit as claimed in one of claims 7 to 10, wherein said synchronization means (24) include a gate circuit (50, 51) connected to said first frequency divider means (19) and the latch circuit (64, 65) connected to said second frequency divider means (29).

12. A circuit as claimed in claim 11, wherein output data from said latch circuit (64, 65) in said synchronization means (24) is preset to said first frequency divider means (19).

13. A digital signal reproducing circuit comprising:

a wave-shaping circuit (16) for converting high-frequency signals comprising digital signals modulated by the predetermined modulation system into binary signals;

a phase locked loop circuit means (81) for generating a bit synchronizing clock synchronized in phase to the leading edge of said binary signal produced by said wave-shaping circuit (16); and

data processor means (84) for producing digital signals from said binary signal under control of said bit synchronizing clock generated by said phase locked loop circuit means (81);

characterised in that said digital signal reproducing circuit further comprises:

pattern detector means (82) and a phase error detecting means, and wherein:

said pattern detector means detects a predetermined interval between two leading edges of the input binary signal;

said phase locked loop circuit means (81) includes a phase comparator (85) for comparing in phase said binary signal outputted from said wave-shaping circuit (16) with said bit synchronizing clock at the specified edge timing of said binary signal, an oscillator circuit (87) for generating a master clock on the basis of the output of said phase comparator (85) and a frequency divider circuit (88) for dividing said master clock and for generating a bit synchronizing clock synchronized with said binary signal;

said phase error detecting means (83) includes a frequency divider (88, 89) and a register (93, 94) and outputs a correction signal for correcting said binary signal after the specified signal pattern detected by said pattern detector means (82);

said phase error detecting means further includes counter means (95—98) measuring the time from the last leading edge and the register (93, 94) samples the counter means at the trailing edge of the input binary signal between said leading edges; and

said data processor means (84) includes correcting means (99—101), and produces corrected digital signals in response to said timing signal and said first data signal.

14. A circuit as claimed in claim 13, wherein said phase locked loop circuit means (81) further include a phase comparator means (85) for comparing said binary signals with said bit synchronization signals at the timing of the leading edges of said binary signals.

15. A circuit as claimed in claim 14, wherein said phase locked loop circuit means (81) further generate leading edge detection pulses of said binary signal.

16. A circuit as claimed in claim 14 or 15, wherein said pattern detector means (82) detect that a space between leading edges of said binary signal is two times the minimum inversion period.

17. A circuit as claimed in claim 14 or 15, wherein said pattern detector means (82) detect that a space between leading edges of said binary signal is two times the maximum inversion period.

18. A circuit as claimed in one of claims 13 to 17, wherein said phase locked loop circuit means (81) further include a phase comparator means (85, 105) for comparing said binary signals with said bit synchronization signals at the timing of the trailing edges of said binary signals.

19. A circuit as claimed in claim 18, wherein said phase locked loop circuit means (81) further generate trailing edge detection pulses of said binary signal.

20. A circuit as claimed in claim 18 or 19, wherein said pattern detector means (82) detect that a space between trailing edges of said binary signal is two times the minimum inversion period.

21. A circuit as claimed in claim 18 or 19, wherein said pattern detector means (82) detect that a space between trailing edges of said binary signal is two times the maximum inversion period.

22. A circuit as claimed in one of claims 13 to 21, wherein said phase error detecting means (83) generate a first phase difference detection signal and a second phase difference detection signal in different phases by dividing said master clock, and further generate a third phase difference detection signal and a fourth phase difference detection signal in different phases by further dividing said first phase difference detection signal, and wherein said register (93, 94) outputs said correction signal after said first, second, third and fourth phase difference detection signals are inputted and the specified patterns are detected by said pattern detector means (82).

**Patentansprüche**

1. Schaltung zur Wiedergabe digitaler Signale

mit einer Wellenformungsschaltung (16) zur Umnwandlung von Hochfrequenzsignalen, die von dem vorbestimmten Modulationssystem modulierte digitale Signale enthalten, in binäre Signale,

mit einer Schaltungsanordnung (17, 18) mit Phasenregelkreis zur Erzeugung Bit-Synchronisiertakts, der mit der Vorderflanke des von der Wellenformungsschaltung (16) erzeugten binären Signals phasensynchronisiert ist,

sowie mit einer Datenverarbeitungseinrichtung (26) zur Erzeugung digitaler Signale aus den genannten binären Signalen unter Steuerung des von der Schaltungsanordnung (17, 18) mit Phasenregelkreis erzeugten Bit-Synchronisiertakts, dadurch gekennzeichnet,

daß die Schaltung zur Wiedergabe digitaler Signale ferner einen ersten und einen zweiten Frequenzteiler (19, 20), eine erste und eine zweite Musterdetektoreinrichtung (21, 22), eine Synchronisiereinrichtung und eine Einrichtung (25) zur Erzeugung eines Zeitsteuersignals aufweist,

daß die Schaltungsanordnung (17, 18) mit Phasenregelkreis eine erste Phasenregelkreisschaltung (17) aufweist zur Erzeugung eines mit der Vorderflanke des binären Signals phasensynchronisierten ersten Bit-Synchronisiertakts und von mit dem ersten Bit-Synchronisiertakt synchronisierten Vorderflankendetecktordaten, sowie eine zweite Phasenregelkreisschaltung (18) zur Erzeugung eines mit der Hinterflanke des binären Signals phasensynchronisierten zweiten Bit-Synchronisiertakts und von mit dem zweiten Bit-Synchronisiertakt synchronisierten Hinterflankendetektordaten,

daß der erste und der zweite Frequenzteiler (19, 20) den ersten bzw. den zweiten Bit-Synchronisiertakt teilen,

daß die erste und die zweite Musterdetektoreinrichtung (21, 22) jeweils Signalmuster erfassen, die in dem binären Signal spezifiziert sind,

daß die Synchronisiereinrichtung (23, 24) nach dem Erfassen der Signalmuster durch die erste (21) und die zweite Musterdetektoreinrichtung (22) das Ausgangssignal des ersten und des zweiten Frequenzteilers (19, 20) synchronisiert.

daß Daten aus dem zweiten Freqüenzteiler (20) von einer ersten Verriegelungsschaltung (24) an ihrer Hinterflanke verriegelt werden,

daß der erste Frequenzteiler (19) von der Verriegelungsschaltung gesetzt wird, wenn die Musterdetektoreinrichtung (21) ein vorbestimmtes Intervall zwischen den Vorderflanken des binären Signals feststellt,

daß die Einrichtung (25) zur Erzeugung des Zeitsteuersignals nach der Synchronisierung durch die Synchronisiereinrichtung (23, 24) die Phasendifferenz aller Ausgangssignale des ersten und des zweiten Frequenzteilers (19, 20) ermittelt und Zeitsteuersignale auf der Basis der Phasendifferenz und des zweiten Datensignals erzeugt,

daß die Beziehung zwischen den Dateninhalten der Verriegelungsschaltung (24) und des ersten Frequenzteilers (19) durch Steuerung einer Gatterschaltung (67) die Abtastzeit der wiederzugebenden Daten bestimmt,

und daß die Datenverarbeitungseinrichtung (26) digitale Daten erzeugt, die durch das genannte Zeitsteuersignal und das genannte erste Datensignal korrigiert sind.

2. Schaltung nach Anspruch 1, bei der der erste und der zweite Frequenzteiler (19, 20) den ersten bzw. den zweiten Bit-Synchronisiertakt durch vier teilen.

3. Schaltung nach Anspruch 1 oder 2, bei der die erste bzw. die zweite Musterdetektoreinrichtung (21, 22) die genannten Signalmuster feststellen, die zweimal groß sind wie die minimale Inversionsperiode des binären Signals.

4. Schaltung nach Anspruch 1 oder 2, bei der die erste bzw. die zweite Musterdetektoreinrichtung (21, 22) die genannten Signalmuster feststellen, die zweimal groß sind wie die maximale Inversionsperiode des binären Signals.

5. Schaltung nach Anspruch 2, bei der die Synchronisiereinrichtung (23, 24) eine Verriegelungsschaltung (62, 63, 64, 65) und eine Gatterschaltung (50, 51, 54, 55) enthält, die mit dem ersten und dem zweiten Frequenzteiler (19, 20) verbunden sind.

6. Schaltung nach Anspruch 5, bei der die Synchronisiereinrichtung (23, 24) eine mit dem ersten Frequenzteiler (19) verbunden zweite Verriegelungsschaltung (62, 63) aufweist und die erste Verriegelungsschaltung (64, 65) mit dem zweiten Frequenzteiler (20) verbunden ist, und bei der die Ausgangsdaten der zweiten Verriegelungsschaltung (62, 63) auf den zweiten Frequenzteiler (20) voreingestellt werden und die Ausgangsdaten der ersten Verriegelungsschaltung (64, 65) auf den ersten Frequenzteiler (62, 63) voreingestellt werden.

7. Schaltung zur Wiedergabe digitaler Signale

mit einer Wellenformungsschaltung (16) zur Umwandlung von Hochfrequenzsignalen, die von dem vorbestimmten Modulationssystem modulierte digitale Signale enthalten, in binäre Signale,

mit einer Schaltungsanordnung (17, 18) mit Phasenregelkreis zur Erzeugung eines Bit-Synchronisiertakts, der mit der Vorderflanke des von der Wellenformungsschaltung (16) erzeugten binären Signals phasensynchronisiert ist,

sowie mit einer Datenverarbeitungseinrichtung (26) zur Erzeugung digitaler Signale aus den genannten binären Signale unter Steuerung des von der Schaltungsanordnung (17, 18) mit Phasenregelkreis erzeugten Bit-Synchronisiertakts, dadurch gekennzeichnet,

daß die Schaltung zur Wiedergabe digitaler Signale ferner eine ersten und einen zweiten Frequenzteiler (19, 20), eine Musterdetektoreinrichtung (21), eine Synchronisiereinrichtung (24) und eine Einrichtung (25) zur Erzeugung eines Zeitsteuersignals aufweist,

daß die Schaltungsanordnung (17, 18) mit Phasenregelkreis eine erste Phasenregelkreisschaltung (17) aufweist zur Erzeugung eines mit der Vorderflanke des binären Signals phasensynchronisierten ersten Bit-Synchronisiertakts und von mit dem ersten Bit-Synchronisiertakt synchronisierten Vorderflankendetektordaten, sowie eine zweite Phasenregelkreisschaltung (18) zur Erzeugung eines mit der Hinterflanke des binären Signals phasensynchronisierten zweiten Bit-Synchronisiertakts und von mit dem zweiten Bit-Synchronisiertakt synchronisierten Hinterflankendetektordaten,

daß der erste und der zweite Frequenzteiler (19, 20) den ersten bzw. den zweiten Bit-Synchronisiertakt teilen,

daß die Musterdetektoreinrichtung (21) Signalmuster erfaßt, die in dem binären Signal spezifiziert sind

daß die Synchronisiereinrichtung (24) nach dem Erfassen der Signalmuster durch die Musterdetektoreinrichtung (21) das Ausgangssignal des ersten und des zweiten Frequenzteilers (19, 20) synchronisiert,

daß Daten aus dem zweiten Frequenzteiler (20) von einer ersten Verriegelungsschaltung (24) an ihrer Hinterflanke verriegelt werden,

daß der erste Frequenzteiler (19) von der Verriegelungsschaltung gesetzt wird, wenn die Musterdetektoreinrichtung (21) ein vorbestimmtes Intervall zwischen den Vorderflanken des binären Signals feststellt,

daß die Einrichtung (25) zur Erzeugung des Zeitsteuersignals nach der Synchronisierung durch die Synchronisiereinrichtung (23, 24) die Phasendifferenz aller Ausgangssignale des ersten und des zweiten Frequenzteilers (19, 20) ermittelt und Zeitsteuersignale auf der Basis der Phasendifferenz und des zweiten Datensignals erzeugt,

daß die Beziehung zwischen den Dateninhalten der Verriegelungsschaltung (24) und des ersten Frequenzteilers (19) durch Steuerung einer Gatterschaltung (67) die Abtastzeit der wiederzugebenden Daten bestimmt,

und daß die Datenverarbeitungseinrichtung (26) digitale Daten erzeugt, die durch das genannte Zeitsteuersignal und das genannte erste Datensignal korrigiert sind.

8. Schaltung nach Anspruch 7, bei der der erste und der zweite Frequenzteiler (19, 20) den ersten bzw. den zweiten Bit-Synchronisiertakt durch vier teilen.

9. Schaltung nach Anspruch 7 oder 8, bei der die Musterdetektoreinrichtung (21) Signalmuster detektiert, die zweimal so groß sind wie die minimale Inversionsperiode des binären Signals.

10. Schaltung nach Anspruch 7 oder 8, bei der die Musterdetektoreinrichtung (21) Signalmuster detektiert, die jeweils zweimal so groß sind wie die maximale Inversionsperiode des binären Signals.

11. Schaltung nach einem der Ansprüche 7 bis 10, bei der die Synchronisiereinrichtung (24) eine mit dem ersten Frequenzteiler (19) verbundene Gatterschaltung (50, 51) und die mit dem zweiten Frequenzteiler (29) verbundene Verriegelungsschaltung (64, 65) umfaßt.

12. Schaltung nach Anspruch 11, bei der die Ausgangsdaten der Verriegelungsschaltung (64, 65) in der Synchronisiereinrichtung (24) auf den ersten Frequenzteiler (19) voreingestellt werden.

13. Schaltung zur Wiedergabe digitaler Signale

mit einer Wellenformungsschaltung (16) zur Umwandlung von Hochfrequenzsignalen, die von dem vorbestimmten Modulationssystem modulierte digitale Signale enthalten, in binäre Signale,

mit einer Schaltungsanordnung (81) mit Phasenregelkreis zur Erzeugung Bit-Synchronisiertakts, der mit der Vorderflanke des von der Wellenformungsschaltung (16) erzeugten binären Signals phasensynchronisiert ist,

sowie mit einer Datenverarbeitungseinrichtung (84) zur Erzeugung digitaler Signale aus den genannten binären Signalen unter Steuerung des von der Schaltungsanordnung (17, 18) mit Phasenregelkreis erzeugten Bit-Synchronisiertakts, dadurch gekennzeichnet,

daß die Schaltung zur Wiedergabe digitaler Signale ferner eine Musterdetektoreinrichtung (82) und eine Phasenfehlerdetektoreinrichtung (83) enthält,

daß die Musterdetektoreinrichtung ein vorbestimmtes Intervall zwischen zwei Vorderflanken des binären Eingangssignals ermittelt,

daß die Schaltungsanordnung (81) mit Phasenregelkreis einen Phasenkomparator (85) zum Phasenvergleich des von der Wellenformungsschaltung (16) ausgegebenen binären Signals mit dem Bit-Synchronisiertakt in den spezifizierten Flankenzeiten des binären Signals, ferner eine Oszillatorschaltung (87) zur Erzeugung eines Haupttakt auf der Basis des Ausgangssignals des Phasenkomparators (85) sowie eine Frequenzteilerschaltung (88) zum Teilen des Haupttakts und zur Erzeugung eines mit dem binären Signal synchronisierten Bit-Synchronisiertakts aufweist,

daß die Phasenfehlerdetektoreinrichtung (83) einen Frequenzteiler (88, 89) und ein Register (93, 94) aufweist und ein Korrektursignal ausgibt, das zur Korrektur des binären Signals nach der Erfassung des spezifierten Signalmusters durch die musterdetektoreinrichtung (82) dient

daß die Phasenfehlerdetektoreinrichtung ferner Zählmittel (95, 98) zur Messung der seit der letzten Vorderflanke vergangenen Zeit aufweist und das Register (93, 94) die Zählmittel an der zwischen den genannten Vorderflanken liegenden Hinterflanke des binären Eingangssignals abtastet,

und daß die Datenverarbeitungseinrichtung (84) eine Korrektureinrichtung (99—101) umfaßt und in Abhängigkeit von dem Zeitsteuersignal und dem ersten Datensignal korrigierte digitale Signale erzeugt.

14. Schaltung nach Anspruch 13, bei der die Schaltungsanordnung (81) mit Phasenregelkreis ferner einen Phasenkomparator (85) enthält, der zu den Zeiten der Vorderflanken der binären Signale letztere mit den Bit-Synchronisiersignalen vergleicht.

15. Schaltung nach Anspruch 14, bei der die Schaltungsanordnung (81) mit Phasenregelkreis ferner Vorderflanken-Detektorimpulse der binären Signale erzeugt.

16. Schaltung nach Anspruch 14 oder 15, bei der die Musterdetektoreinrichtung (82) feststellt, daß der Zwischenraum zwischen Vorderflanken des binären Signals zweimal so groß ist wie die minimale Inversionsperiode.

17. Schaltung nach Anspruch 14 oder 15, bei der die Musterdetektoreinrichtung (82) feststellt, daß der Zwischenraum zwischen Vorderflanken des binären Signals zweimal so groß ist wie die maximale Inversionsperiode.

18. Schaltung nach einem der Ansprüche 13 bis 17, bei der Schaltungsanordnung (81) mit Phasenregelkreis ferner einen Phasenkomparator (85, 105) enthält, der in den Zeiten der Hinterflanken der binären Signale letztere mit den Bit-Synchronisiersignalen vergleicht.

19. Schaltung nach Anspruch 18, bei der die Schaltungsanordnung (81) mit Phasenregelkreis ferner Hinterflanken-Detektorimpulse der binären Signale erzeugt.

20. Schaltung nach Anspruch 14 oder 15, bei der die Musterdetektoreinrichtung (82) feststellt, daß der Zwischenraum zwischen Hinterflanken des binären Signals zweimal so groß ist wie die minimale Inversionspperiode.

21. Schaltung nach Anspruch 18 oder 19, bei der die Musterdetektoreinrichtung (82) feststellt, daß der Zwischenraum zwischen Hinterflanken des binären Signals zweimal so groß ist wie die maximale Inversionsperiode.

22. Schaltung nach einem der Ansprüche 13 bis 21, bei der die Phasenfehlerdetektoreinrichtung (83) durch Teilen des Haupttakts ein erstes Phasendifferenzdetektorsignal und ein zweites Phasendifferenzdetektorsignal mit unterschiedlichen Phasen erzeugt und durch weiteres Teilen des ersten Phasendifferenzdetektorsignals ein drittes Phasendifferenzdetektorsignal und ein viertes Phasendifferenzdetektorsignal mit unterschiedlichen Phasen erzeugt, und bei der das Register (93, 94) das genannte Korrektursignal ausgibt, nachdem das erste, zweite, dritte und vierte Phasendifferenzdetektorsignal eingegeben und die spezifizierten Signalmuster von der Musterdetektoreinrichtung (82); festgestellt wurden.

**Revendications**

1. Un circuit de reproduction de signaux numériques comprenant:

un circuit de mise en forme d'ondes (16) pour convertir des signaux haute fréquence comprenant des signaux numériques modulés par le système de modulation prédéterminé en signaux binaires;

un moyen de circuit à boucle verrouillée en phase (17, 18) pour produire une horloge binaire de synchronisation synchronisée en phase sur le flanc avant dudit signal binaire produit par ledit circuit de mise en forme d'ondes (16); et

un moyen de processeur de données (26) pour produire des signaux numériques à partir dudit signal binaire sous la commande de ladite horloge binaire de synchronisation produite par ledit moyen de circuit synchronisation à boucle verrouillée en phase (17, 18);

caractérisé en ce que ledit circuit de reproduction de signaux numériques comprend en outre:

un premier et un second moyens diviseurs de fréquence (19, 20), un premier et un second moyens détecteurs de courbes (21, 22), un moyen de synchronisation et un moyen de génération de signal de temporisation (25), et dans lequel:

ledit moyen de circuit à boucle verrouillée en phase (17, 18) comprend un premier moyen de circuit à boucle verrouillée en phase (17) servant à produire une première horloge binaire de synchronisation synchronisée en phase sur le flanc avant dudit signal binaire et des données de détection de flanc avant synchronisée sur ladite première horloge binaire de synchronisation, et un second moyen de circuit à boucle verrouillée en phase (18) servant à produire une seconde horloge binaire de synchronisation synchronisée en phase sur le flanc arrière dudit signal binaire et les données de détection de flanc arrière synchronisées sur ladite seconde horloge binaire de synchronisation;

lesdits premier et second moyens diviseurs de fréquence (19, 20) divisent respectivement lesdites première et seconde horloges binaires de synchronisation;

lesdits premier et second moyens détecteur de courbe (21, 22) détectent respectivement des courbes de signaux spécifiées dans ledit signal binaire;

ledit moyen de synchronisation (23, 24) synchronise la sortie desdits premier et second moyens diviseurs de fréquence (19, 20) après que les courbes de signaux sont détectées par ledit premier moyen détecteur de courbes (21) ou par ledit second moyen détecteur de courbes (22);

des données provenant du second diviseur de fréquence (20) sont verrouillées par un premier circuit de verrouillage (24) au niveau d'un flanc arrière de celles-ci;

le premier diviseur de fréquence (19) est positionnée par le circuit de verrouillage lorsque le détecteur de courbes (21) détecte un écartement prédéterminé entre deux flancs avant du signal binaire;

ledit moyen de génération de signal de temporisation (25) détecte le déphasage de chaque sortie desdits premier et second moyens diviseurs de fréquence (19, 20) après synchronisation par ledit moyen de synchronisation (23, 24) et produit des signaux de temporisation sur la base du déphasage et dudit second signal de données;

la relation entre les contenus de données du circuit de verrouillage (24) et le premier diviseur de fréquence (19) définit le temps d'échantillonnage des données devant être reproduites par la commande d'un circuit de porte (67); et

ledit moyen de processeur de données (26) produit des signaux numériques corrigés par ledit signal de temporisation et par ledit premier signal de données.

2. Un circuit tel que revendiqué à la revendication 1, dans lequel lesdits premier et second moyens diviseurs de fréquence (19, 20) divisent lesdites première et seconde horloges binaires de synchronisation en quatre, respectivement.

3. Un circuit tel que revendiqué à la revendication 1 ou 2, dans lequel lesdits premier et second moyens détecteurs de courbes (21, 22) détectent lesdites courbes de signaux de deux fois la période d'inversion minimale dudit signal binaire, respectivement.

4. Un circuit tel que revendiqué à la revendication 1 ou 2, dans lequel lesdits premier et second moyens détecteurs de courbes (21, 22) détectent lesdites courbes de signaux de deux fois la période d'inversion maximale dudit signal binaire, respectivement.

5. Un circuit tel revendiqué à la revendication 1, dans lequel lesdits moyens de synchronisation (23, 24) comprennent un circuit de verrouillage (62, 63, 64, 65) et un circuit de porte (50, 51, 54, 55) connecté auxdits premier et second moyens diviseurs de fréquence (19, 20).

6. Un circuit tel que revendiqué à la revendication 5, dans lequel ledit moyen de synchronisation (23, 24) comporte un second circuit de verrouillage (62, 63) connecté audit premier diviseur de fréquence (19) et le premier circuit de verrouillage (64, 65) étant connecté audit second moyen diviseur de fréquence (20), les données de sortie dudit second circuit de verrouillage (62, 63) sont prépositionnées sur ledit second moyen diviseur de fréquence (20), les données de sortie dudit premier circuit (64, 65) sont prépositionnées sur ledit premier moyen diviseur de fréquence (62, 63).

7. Un circuit de reproduction de signaux numériques comprenant:

un circuit de mise en forme d'ondes (16) pour convertir des signaux haute fréquence comprenant des signaux numériques modulés par le système de modulation prédéterminé en signaux binaires;

un moyen de circuit à boucle verrouillée en phase (17, 18) pour produire une horloge binaire de synchronisation synchronisée en phase sur le flanc avant dudit signal binaire produit par ledit circuit de mise en forme d'ondes (16); et

un moyen de processeur de données (26) servant à produire des signaux numériques à partir dudit signal binaire sous la commande de ladite horloge binaire de synchronisation produite par ledit moyen de circuit à boucle verrouillée en phase (17, 18);

caractérisé en ce que ledit circuit de reproduction de signaux numériques comprend en outre:

des premier et second moyens diviseurs de fréquence (19, 20), un moyen détecteur de courbes (21), un moyen de synchronisation (24) et un moyen de génération de signal de temporisation (25), et dans lequel:

ledit moyen de circuit à boucle verrouillée en phase (17, 18) comprend un premier moyen de circuit à boucle verrouillée en phase (17) servant à produire une première horloge binaire de synchronisation synchronisée en phase sur le flanc avant dudit signal binaire et des données de détection de flanc avant synchronisées sur ladite première horloge binaire de synchronisation, et un second moyen de circuit à boucle verrouillée en phase (18) servant à produire une seconde horloge binaire de synchronisation synchronisée en phase sur le flanc arrière dudit signal binaire et de données de détection de flanc arrière synchronisées sur ladite seconde horloge binaire de synchronisation;

lesdits premier et second moyens diviseurs de fréquence (19, 20) divisent respectivement lesdites première et seconde horloges binaires de synchronisation;

ledit moyen détecteur de courbes (21) détecte des courbes de signaux spécifiées dans ledit signal binaire;

ledit moyen de synchronisation (24) synchronise la sortie desdits premier et second moyens diviseurs de fréquence (19, 20) après que les courbes de signaux sont détectées par ledit moyen détecteur de courbes (21);

des données provenant du second diviseur de fréquence (20) sont verrouillées par un circuit de verrouillage sur un flanc arrière de celles-ci;

le premier diviseur de fréquence (19) est positionné par le circuit de verrouillage (24) lorsque le détecteur de courbes (21) détecte un écartement prédéterminé entre deux flancs avant du signal binaire;

ledit moyen de génération de signaux de temporisation (25) détecte le déphasage de chaque sortie desdits premier et second moyens diviseurs de fréquence (19, 20) après synchronisation à l'aide dudit moyen de synchronisation (23, 24) et produit des signaux de temporisation en fonction de déphasage et dudit second signal de données;

la relation entre les contenus des données du circuit de verrouillage (24) et le premier diviseur de fréquence (19) définit le temps d'échantillonnage des données devant être reproduites par la commande d'un circuit de porte (67); et

ledit moyen de processeur de données (26) produit des signaux numériques corrigés par ledit signal de temporisation eet par ledit premier signal de données.

8. Un circuit tel que revendiqué à la revendication 7, dans lequel lesdits premier et second moyens diviseurs de fréquence (19, 20) divisent lesdites première et seconde horloges binaires de synchronisation, respectivement, par quatre.

9. Un circuit tel que revendiqué à la revendication 7 ou 8, dans lequel ledit moyen détecteur de courbes (21) détecte les courbes de signaux de deux fois la période d'inversion minimale dudit signal binaire.

10. Un circuit tel que revendiqué à la revendication 7 ou 8, dans lequel ledit moyen détecteur de courbes (21) détecte des courbes de signaux de deux fois la période d'inversion maximale dudit signal binaire, respectivement.

11. Un circuit tel que revendiqué dans l'une des revendications 7 à 10, dans lequel ledit moyen de synchronisation (24) comprend un circuit de porte (50, 51) connecté audit premier moyen diviseur de fréquence (19) et dans lequel le circuit de verrouillage (64, 65) est connecté audit second moyen diviseur de fréquence (29).

12. Un circuit tel que revendiqué à la revendication 11, dans lequel des données de sortie provenant dudit circuit de verrouillage (64, 65) dans ledit moyen de synchronisation (24) sont prépositionées sur ledit premier moyen diviseur de fréquence (19).

13. Un circuit de reproduction de signaux numériques comprenant:

un circuit de mise en forme d'ondes (16) pour convertir des signaux haute fréquence comprenant des signaux numériques modulés par le système de modulation prédéterminé en signaux binaires;

un moyen de circuit à boucle verrouillée en phase (81) pour produire une horloge binaire de synchronisation synchronisée en phase sur le flanc avant dudit signal binaire produit par ledit circuit de mise en forme d'ondes (16); et

un moyen de processeur de données (84) pour produire des signaux numériques à partir dudit signal binaire sous la commande de ladite horloge binaire de synchronisation produite par ledit moyen de circuit à boucle verrouillée en phase (81);

caractérisé en ce que ledit circuit de repoduction de signaux numériques comprend en outre:

un moyen détecteur de courbes (82) et un moyen de détection d'erreur de phase, et dans lequel:

ledit moyen détecteur de courbes détecte un écartement prédéterminé entre deux flancs avant du signal binaire d'entrée;

ledit moyen de circuit à boucle verrouillée en phase (81) comprend un comparateur de phase (85) pour comparer en phase ledit signal binaire de sortie dudit circuit de mise en forme d'ondes (16) avec ladite horloge binaire de synchronisation à la temporisation du front spécifié dudit signal binaire, un circuit oscillateur (87) pour produire une horloge-mère sur la base de la sortie dudit comparateur de phase (85) et un circuit diviseur de fréquence (88) pour diviser ladite horloge-mère et pour produire une horloge binaire de synchronisation synchronisée avec ledit signal binaire;

ledit moyen de détection d'erreur de phase (83) comprend un diviseur de fréquence (88, 89) et un registre (93, 94) et sort un signal de correction pour corriger ledit signal binaire après que la courbe du signal spécifié soit détectée par ledit moyen détecteur de courbes (82);

ledit moyen de détection d'erreur de phase comprend en outre un moyen compteur (95 à 98) mesurant le temps depuis le dernier flanç avant, et le registre (93, 94) échantillonne le moyen compteur au niveau du flanc arrière du signal binaire d'entrée entre lesdits flancs avant; et

ledit moyen de processeur de données (84) comprend un moyen de correction (99 à 101) et produit des signaux numériques corrigés en réponse audit signal de temporisation et audit premier signal de données.

14. Un circuit tel que revendiqué à la revendication 13, dans lequel ledit moyen de circuit à boucle verrouillée en phase (81) comprend en outre un moyen comparateur de phase (85) servant à comparer lesdits signaux binaires avec lesdits signaux binaires de synchronisation à la temporisation des flancs avant desdits signaux binaires.

15. Un circuit tel que revendiqué à la revendication 14, dans lequel ledit moyen de circuit à boucle verrouillée en phase (81) génère en outre des impulsions de détection de flanc avant dudit signal binaire.

16. Un circuit tel que revendiqué à la revendication 14 ou 15, dans lequel ledit moyen détecteur de courbes (82) détecte qu'un espace entre les flancs avant dudit signal binaire est de deux fois la période d'inversion minimale.

17. Un circuit tel que revendiqué à la revendication 14 ou 15, dans lequel ledit moyen détecteur de courbes (82) détecte qu'un espace entre les flancs avant dudit signal binaire est de deux fois la période d'inversion maximale.

18. Un circuit tel que revendiqué dans l'une des revendications 13 à 17, dans lequel ledit moyen de circuit à boucle verrouillée en phase (81) comprend en outre un moyen comparateur de phase (95, 105) servant à comparer lesdits signaux binaires avec lesdits signaux binaires de synchronisation à la temporisation des flancs arrière desdits signaux binaires.

19. Un circuit tel que revendiqué à la revendication 18, dans lequel ledit moyen de circuit à boucle verrouillée en phase (81) génère en outre des impulsions de détection de flancs arrière dudit signal binaire.

20. Un circuit tel que revendiqué à la revendication 18 ou 19, dans lequel ledit moyen détecteur de courbes (82) détecte qu'un espace entre des flancs arrière dudit signal binaire est de deux fois la période d'inversion minimale.

21. Un circuit tel que revendiqué à la revendication 18 ou 19, dans lequel ledit moyen détecteur de courbes (82) détecte qu'un espace entre des flancs arrière dudit signal binaire est de deux fois la période d'inversion maximale.

22. Un circuit tel que revendiqué dans l'une des revendications 13 à 21, dans lequel ledit moyen de détection d'erreur de phase (83) produit un premier signal de détection de déphasage et un second signal de détection de déphasage dans des phases différentes en divisant ladite horloge-mère, et en outre génère un troisième signal de détection de déphasage et un quatrième signal de détection de déphasage dans différentes phases en divisant en outre ledit premier signal de détection de déphasage, et dans lequel ledit registre (93, 94) sort ledit signal de correction après que lesdits premier, second, troisième et quatrième signaux de détection de déphasage sont entrés et que les courbes spécifiées sont détectées par ledit moyen détecteur de courbes (82).

FIG. 1.

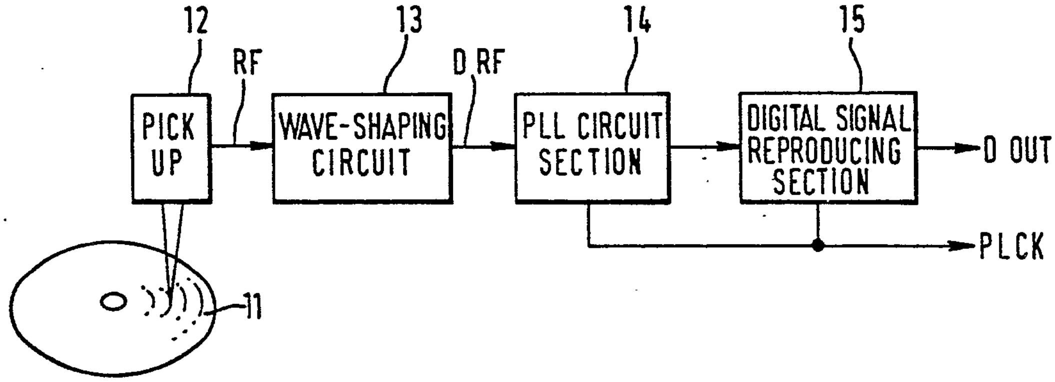
12
RF
13
D RF
14
15
PICK UP
WAVE-SHAPING CIRCUIT
PLL CIRCUIT SECTION
DIGITAL SIGNAL REPRODUCING SECTION
D OUT
PLCK
11

FIG. 2.

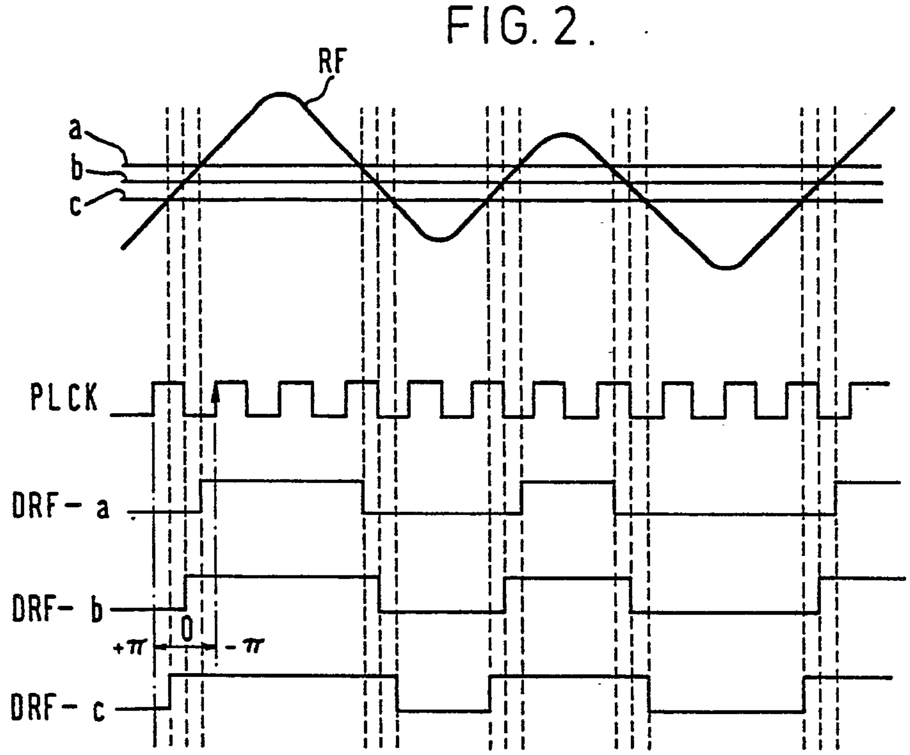
RF
a
b
c
PLCK
DRF- a
DRF- b
+π
0
-π
DRF- c

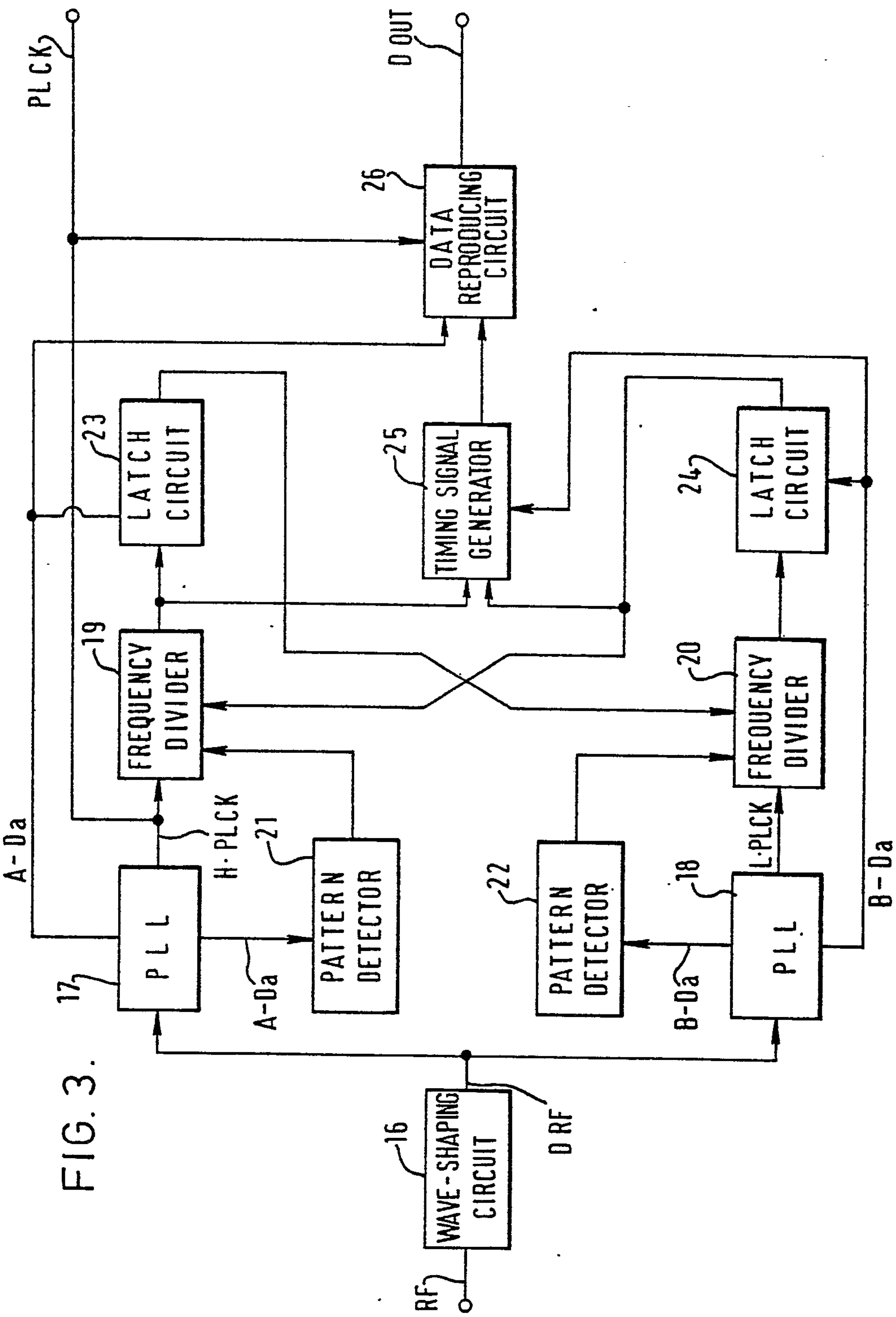
PLCK
D OUT
26
DATA REPRODUCING CIRCUIT
A-Da
23
LATCH CIRCUIT
25
TIMING SIGNAL GENERATOR
24
LATCH CIRCUIT
19
FREQUENCY DIVIDER
20
FREQUENCY DIVIDER
H·PLCK
21
PATTERN DETECTOR
22
PATTERN DETECTOR
L·PLCK
18
B-Da
17
PLL
A-Da
B-Da
PLL
16
WAVE-SHAPING CIRCUIT
D RF
RF

FIG. 3.

FIG. 4.

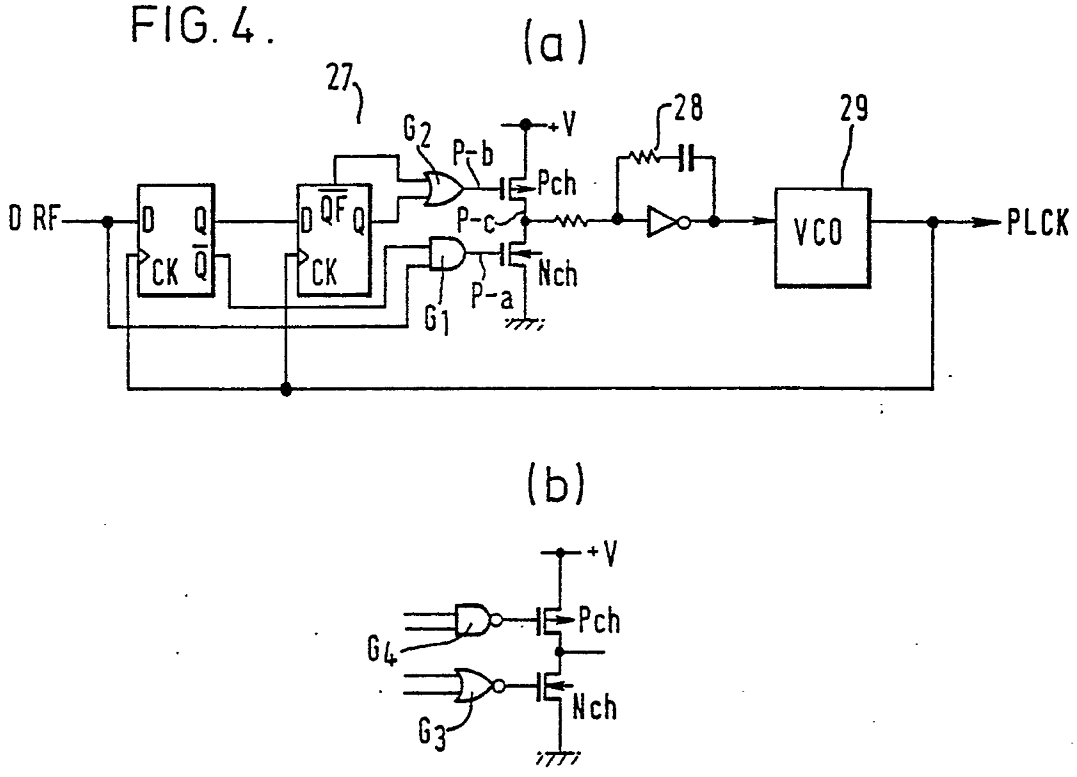
(a)
27
G2
P-b
+V
28
29
DRF
D
Q
CK
Q̄
D
Q̄F
Q
CK
P-c
Pch
VCO
PLCK
G1
P-a
Nch
(b)
+V
Pch
G4
Nch
G3

FIG. 5.

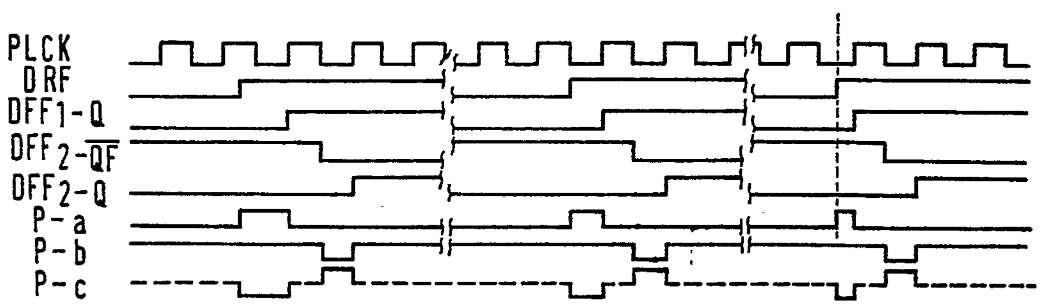
PLCK
DRF
DFF1-Q
DFF2-Q̄F
DFF2-Q
P-a
P-b
P-c

FIG. 6.

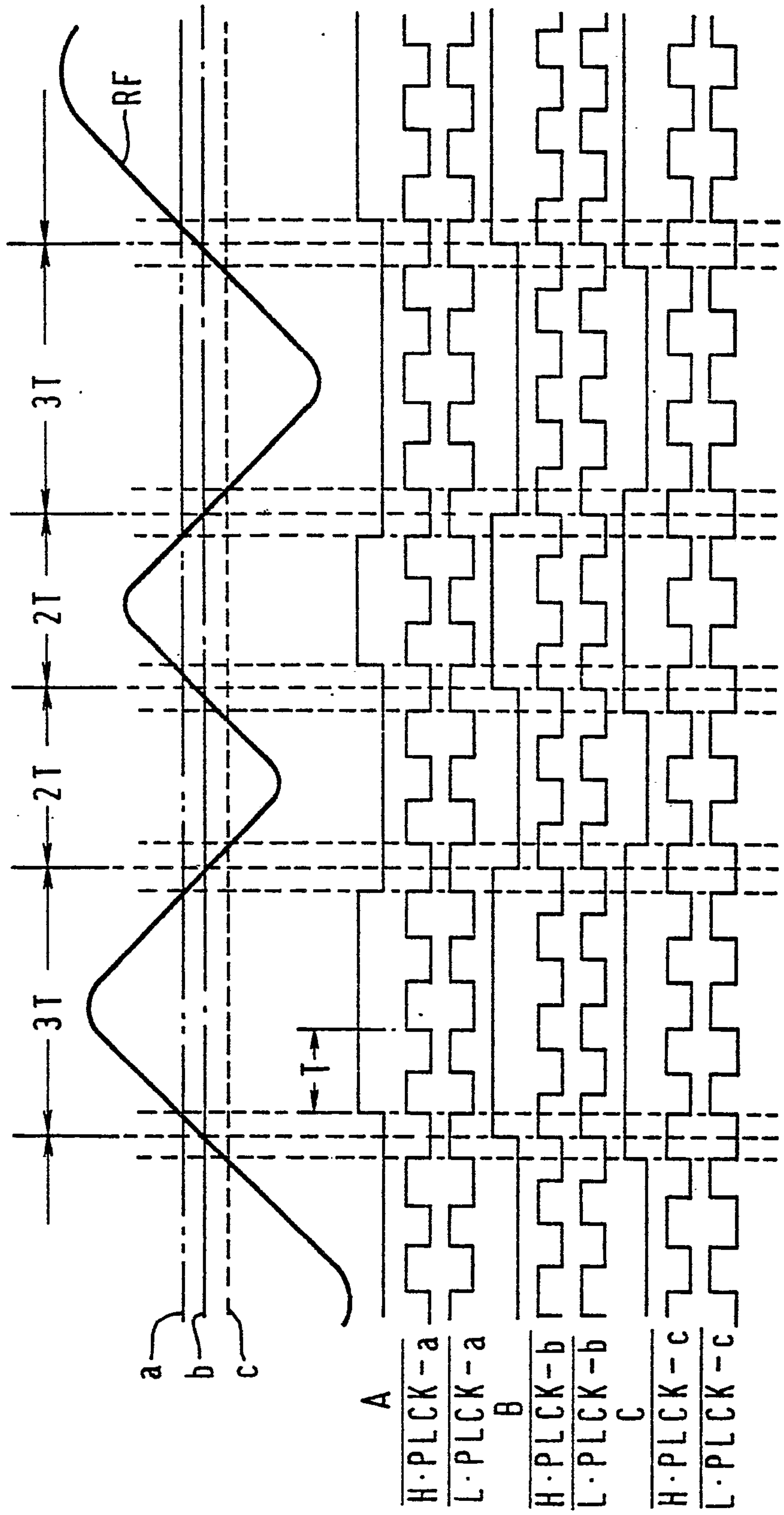
RF
3T
2T
2T
3T
T
a
b
c
A
H·PLCK−a
L·PLCK−a
B
H·PLCK−b
L·PLCK−b
C
H·PLCK−c
L·PLCK−c

FIG. 7.

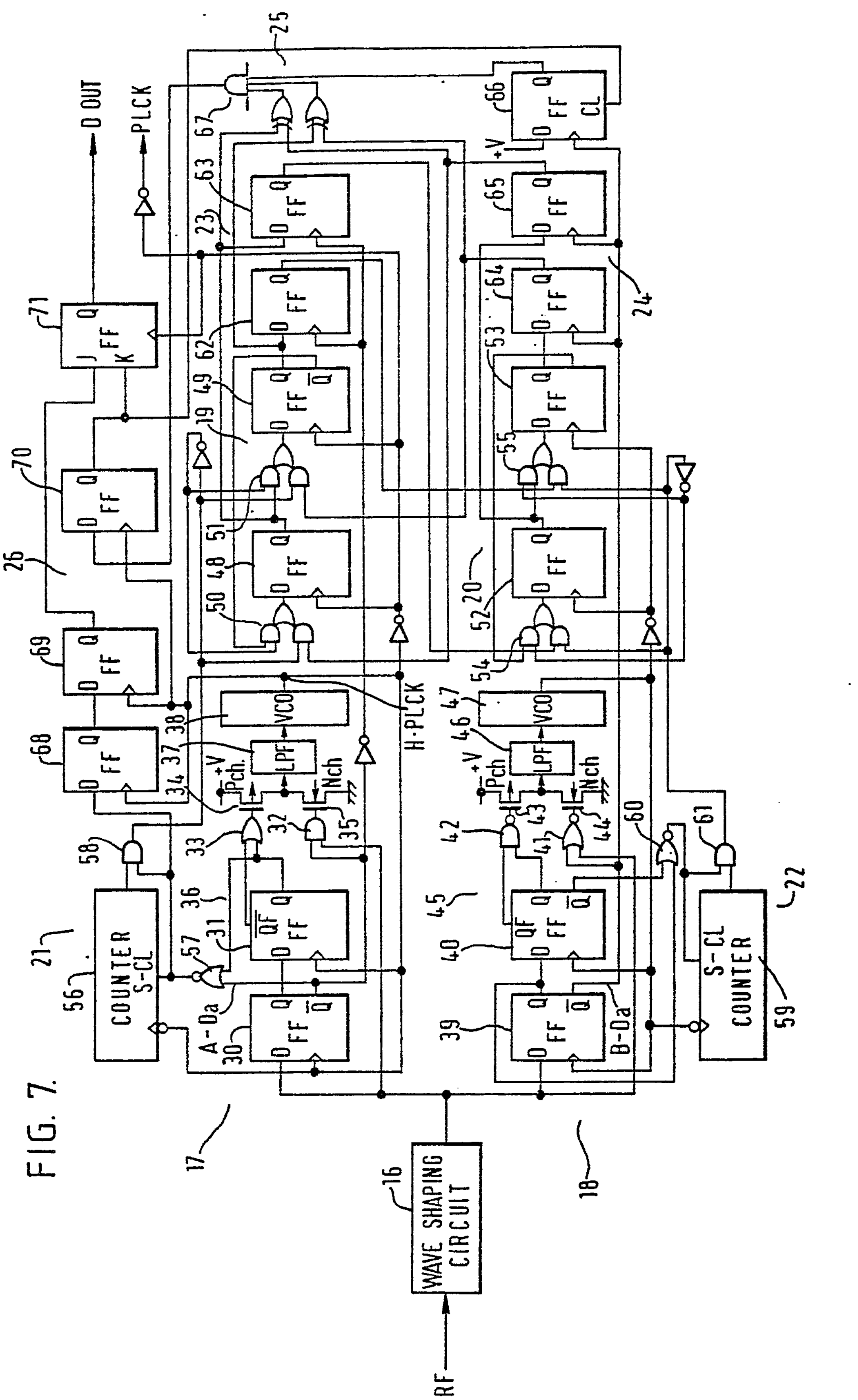
D OUT
PLCK
H·PLCK
COUNTER S-CL
S-CL COUNTER
WAVE SHAPING CIRCUIT
RF
VCO
LPF
Pch
Nch
+V
A-Da
B-Da
FF
CL
QF
J
K
D
Q
16
17
18
19
20
21
22
23
24
25
26
30
31
32
33
34
35
36
37
38
39
40
41
42
43
44
45
46
47
48
49
50
51
52
53
54
55
56
57
58
59
60
61
62
63
64
65
66
67
68
69
70
71

FIG. 8.

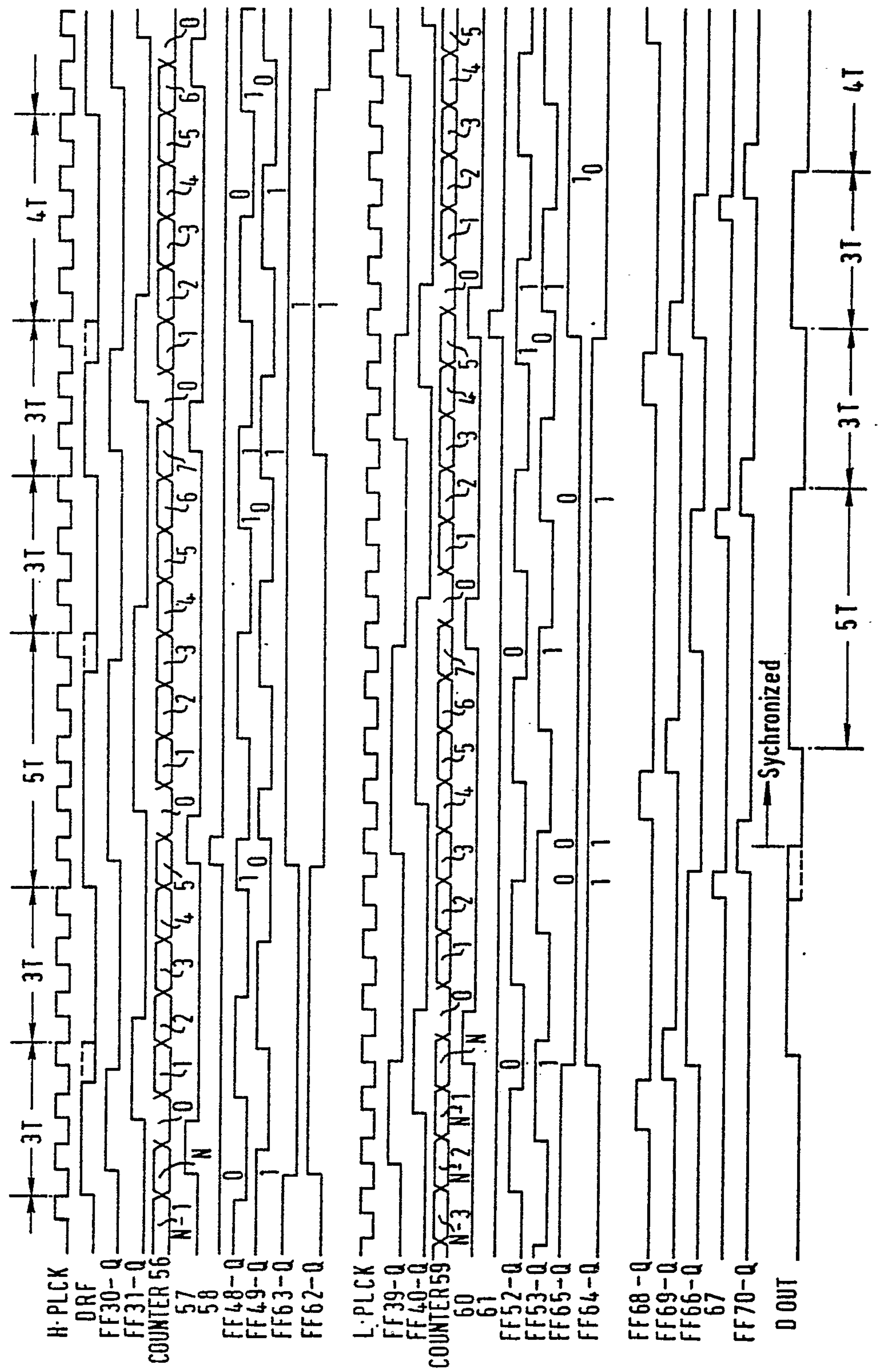
H·PLCK
DRF
FF30-Q
FF31-Q
COUNTER 56
57
58
FF48-Q
FF49-Q
FF63-Q
FF62-Q
L·PLCK
FF39-Q
FF40-Q
COUNTER 59
60
61
FF52-Q
FF53-Q
FF65-Q
FF64-Q
FF68-Q
FF69-Q
FF66-Q
67
FF70-Q
D OUT
3T
3T
5T
3T
3T
4T
Sychronized
5T
3T
3T
4T

FIG. 9.

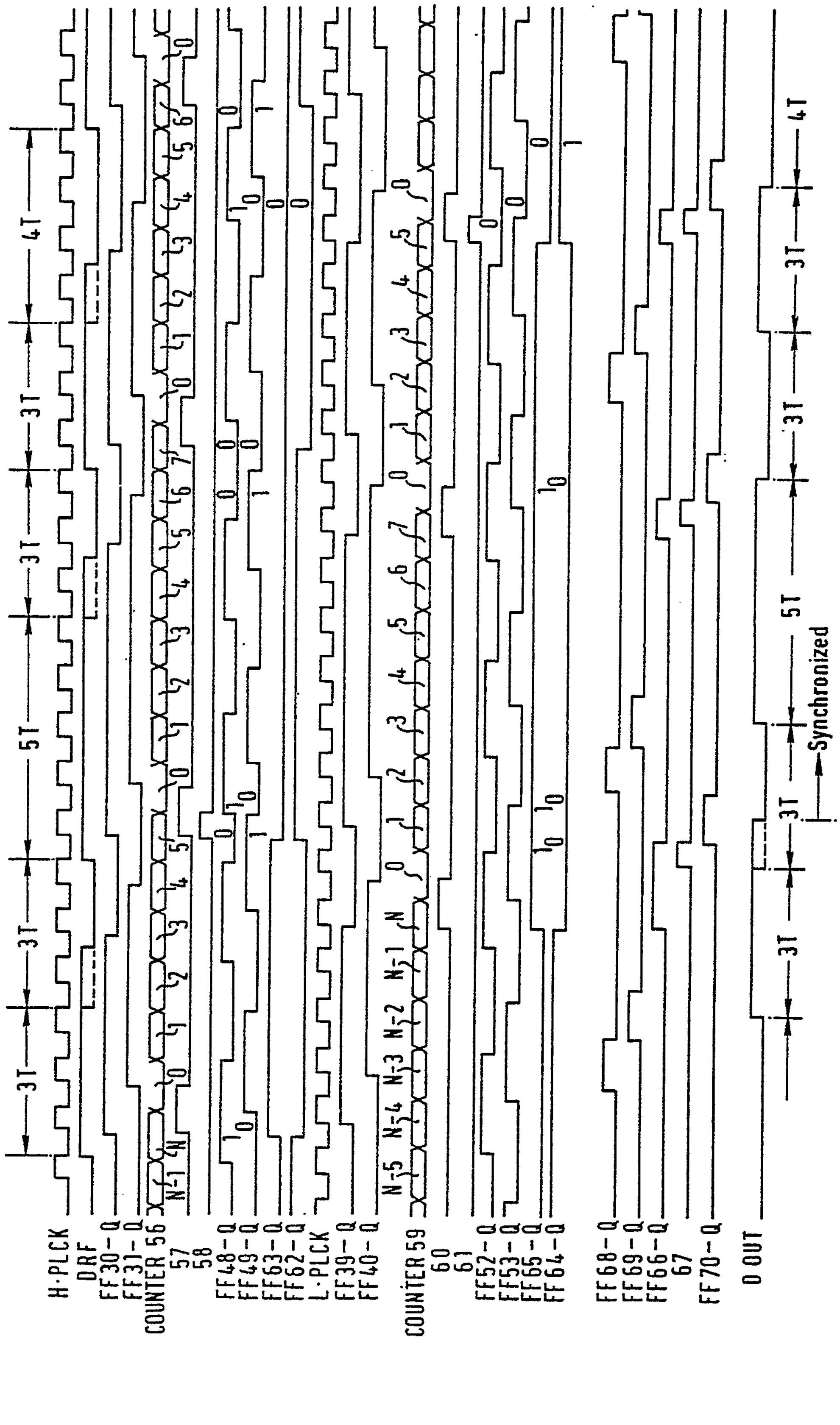
H·PLCK
DRF
FF30-Q
FF31-Q
COUNTER 56
57
58
FF48-Q
FF49-Q
FF63-Q
FF62-Q
L·PLCK
FF39-Q
FF40-Q
COUNTER 59
60
61
FF52-Q
FF53-Q
FF65-Q
FF64-Q
FF68-Q
FF69-Q
FF66-Q
67
FF70-Q
D OUT
3T
5T
4T
Synchronized

FIG.10.

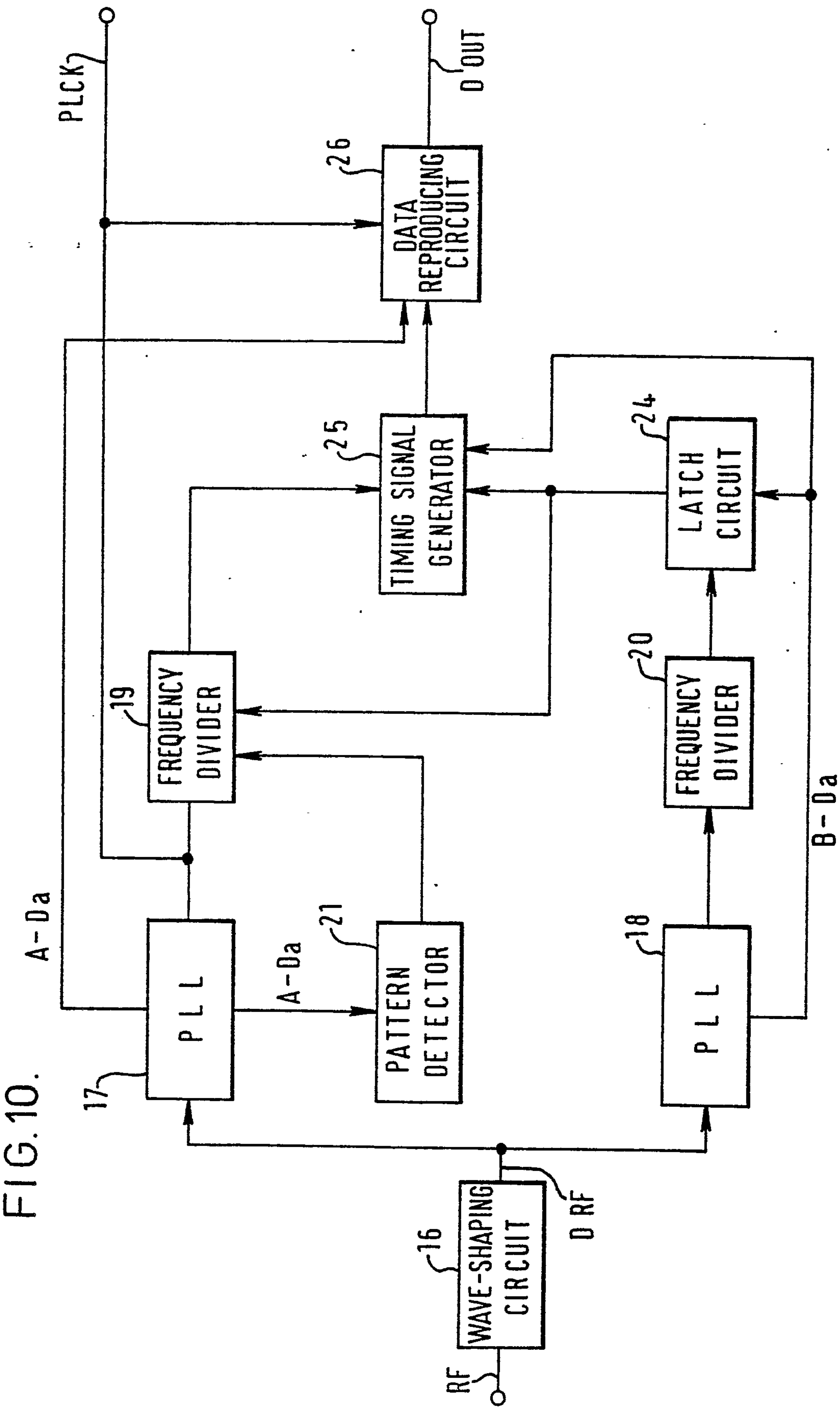
PLCK
D OUT
26
DATA REPRODUCING CIRCUIT
25
TIMING SIGNAL GENERATOR
24
LATCH CIRCUIT
19
FREQUENCY DIVIDER
20
FREQUENCY DIVIDER
B-Da
A-Da
A-Da
21
PATTERN DETECTOR
17
P L L
18
P L L
16
WAVE-SHAPING CIRCUIT
D RF
RF

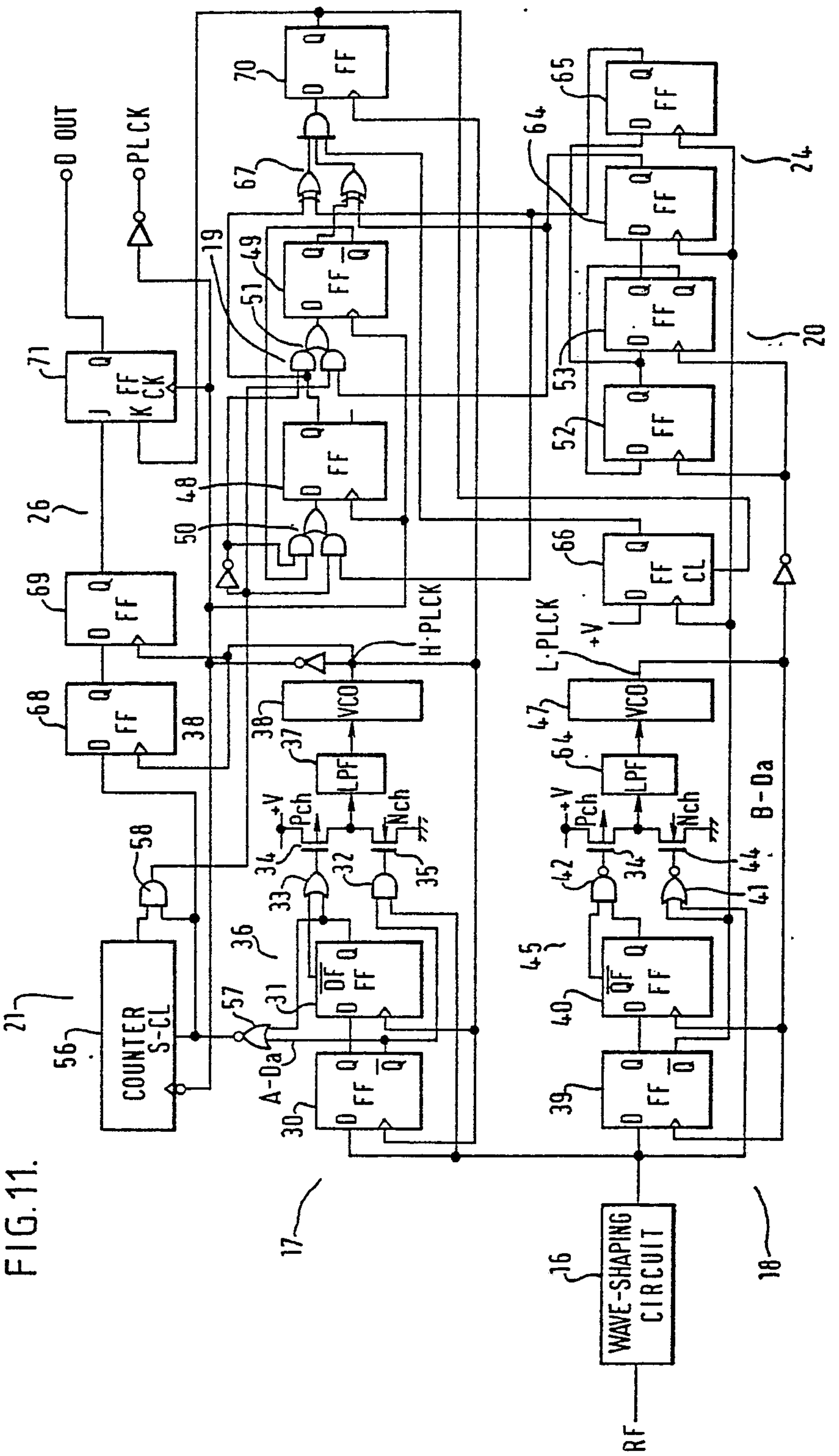
D OUT
PLCK
H·PLCK
L·PLCK
+V
VCO
LPF
Pch
Nch
COUNTER S-CL
A-Da
B-Da
WAVE-SHAPING CIRCUIT
RF
FF
16
17
18
19
20
21
24
26
30
31
32
33
34
35
36
37
38
39
40
41
42
44
45
47
48
49
50
51
52
53
56
57
58
64
65
66
67
68
69
70
71

FIG.11.

FIG. 12.

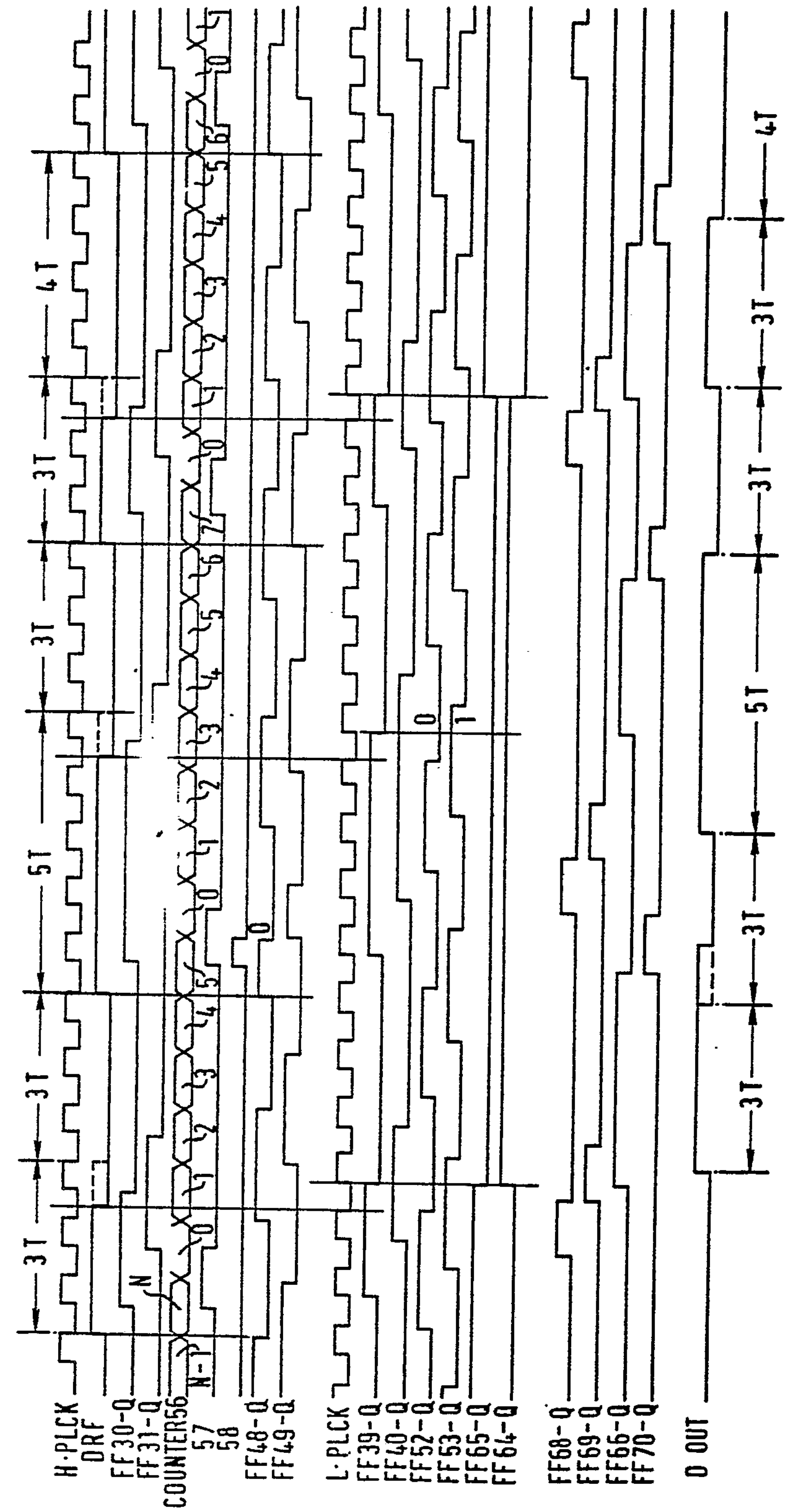
H·PLCK
DRF
FF30-Q
FF31-Q
COUNTER56
57
58
FF48-Q
FF49-Q
L·PLCK
FF39-Q
FF40-Q
FF52-Q
FF53-Q
FF65-Q
FF64-Q
FF68-Q
FF69-Q
FF66-Q
FF70-Q
D OUT
3T
3T
5T
3T
3T
4T
3T
3T
5T
3T
3T
4T

FIG. 13.

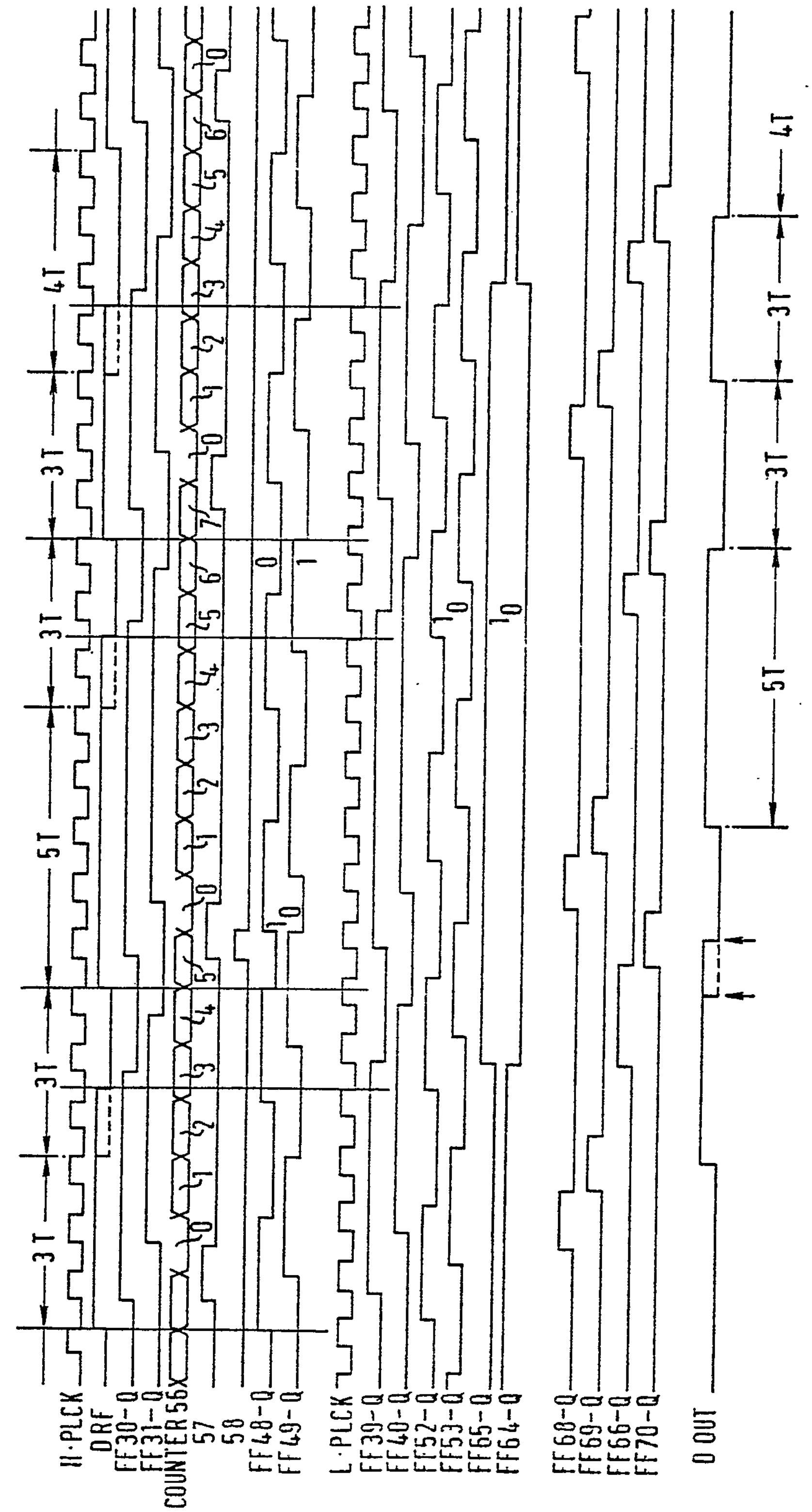
H·PLCK
DRF
FF30-Q
FF31-Q
COUNTER 56
57
58
FF48-Q
FF49-Q
L·PLCK
FF39-Q
FF40-Q
FF52-Q
FF53-Q
FF65-Q
FF64-Q
FF68-Q
FF69-Q
FF66-Q
FF70-Q
D OUT
3T
3T
5T
3T
3T
3T
4T
5T
3T
3T
4T

FIG.14.

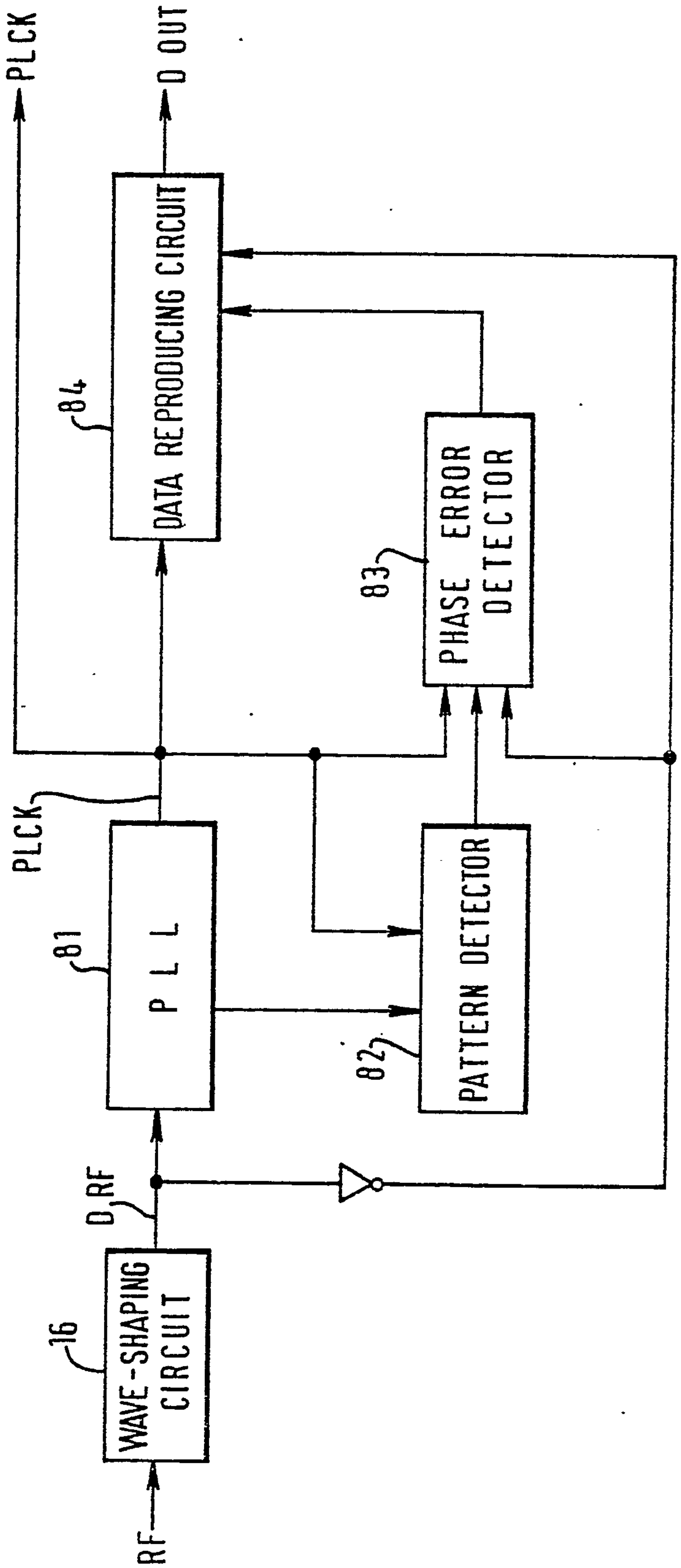
PLCK
D OUT
84
DATA REPRODUCING CIRCUIT
83
PHASE ERROR DETECTOR
81
PLL
PLCK
82
PATTERN DETECTOR
16
WAVE-SHAPING CIRCUIT
D.RF
RF

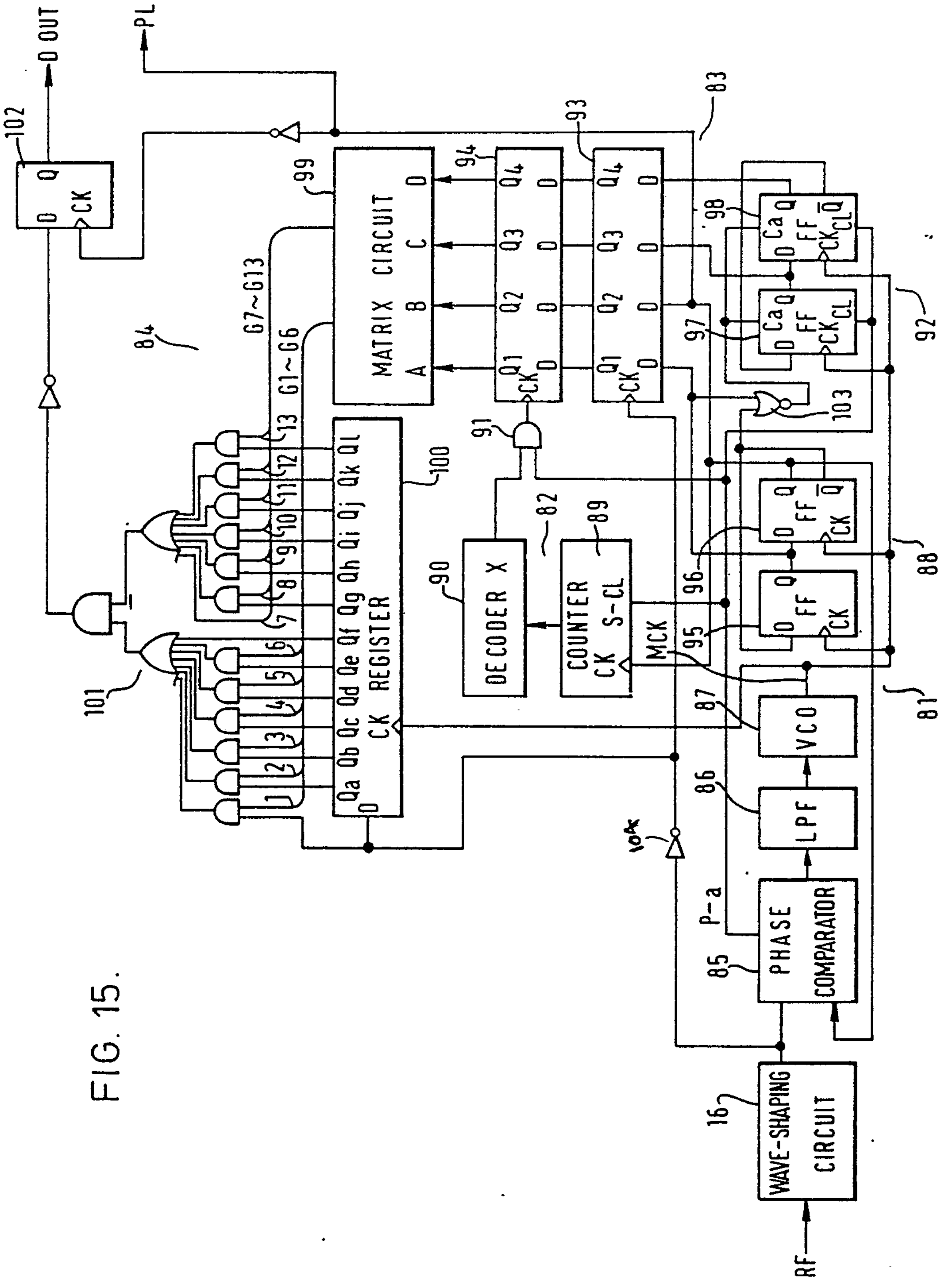
D OUT
PL
MATRIX CIRCUIT
CK REGISTER
DECODER X
COUNTER
CK S-CL
MCK
VCO
LPF
PHASE COMPARATOR
WAVE-SHAPING CIRCUIT
RF
G1~G6
G7~G13
P-a

FIG. 15.

FIG. 16.

(a)

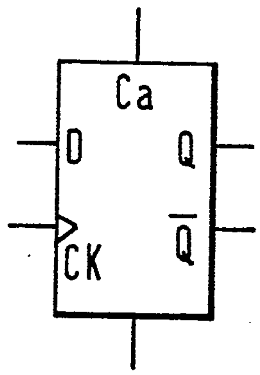


(b)

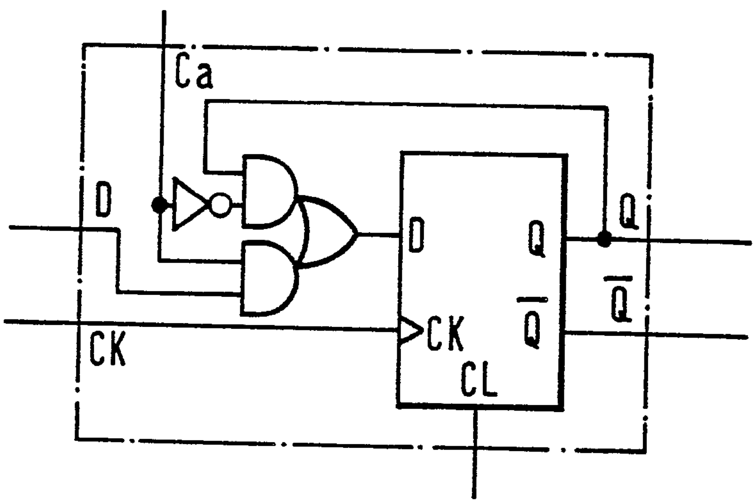

FIG. 17.

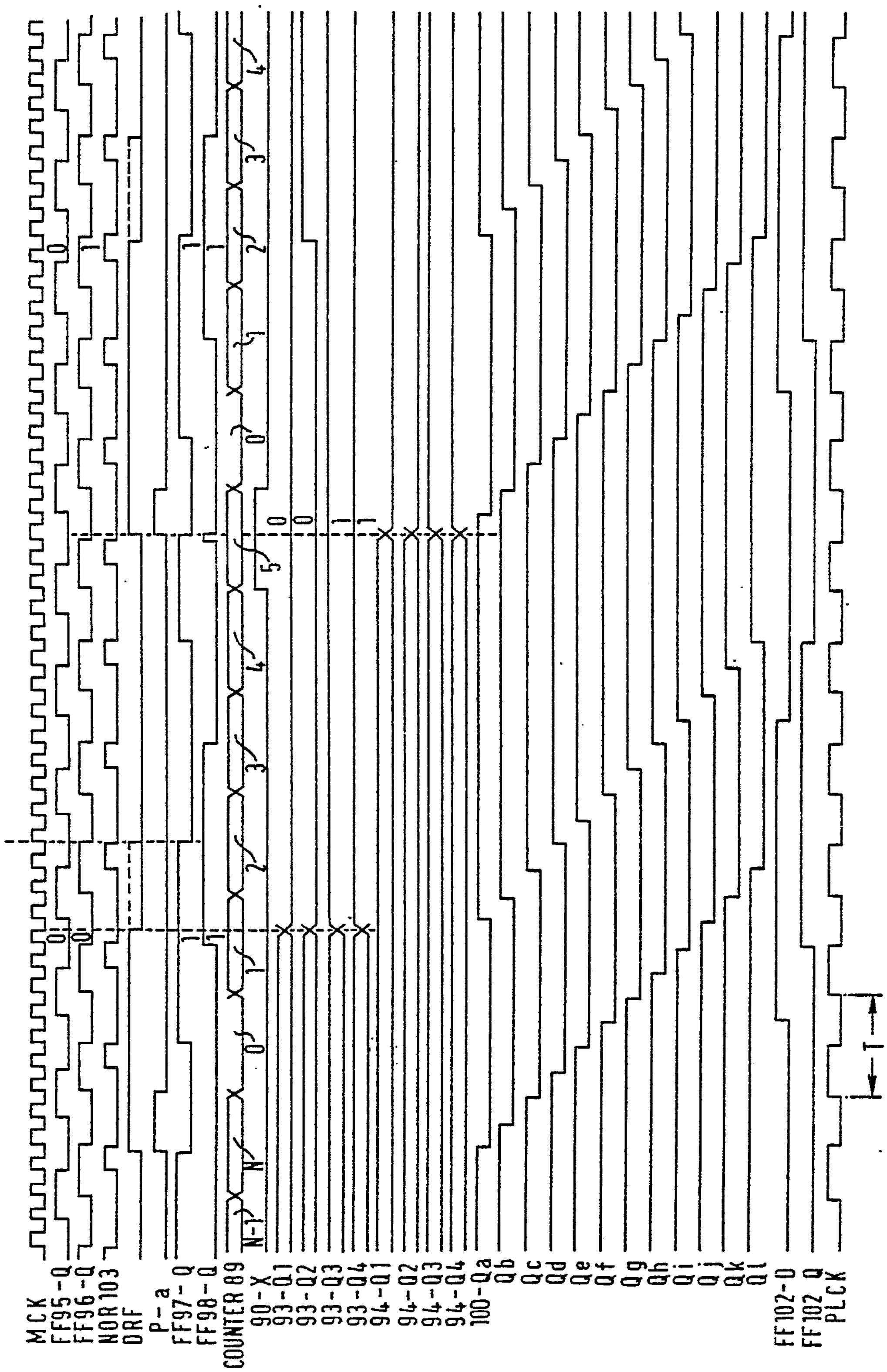
MCK
FF95-Q
FF96-Q
NOR103
DRF
P-a
FF97-Q
FF98-Q
COUNTER 89
90-X
93-Q1
93-Q2
93-Q3
93-Q4
94-Q1
94-Q2
94-Q3
94-Q4
100-Qa
Qb
Qc
Qd
Qe
Qf
Qg
Qh
Qi
Qj
Qk
Ql
FF102-D
FF102 Q
PLCK
T

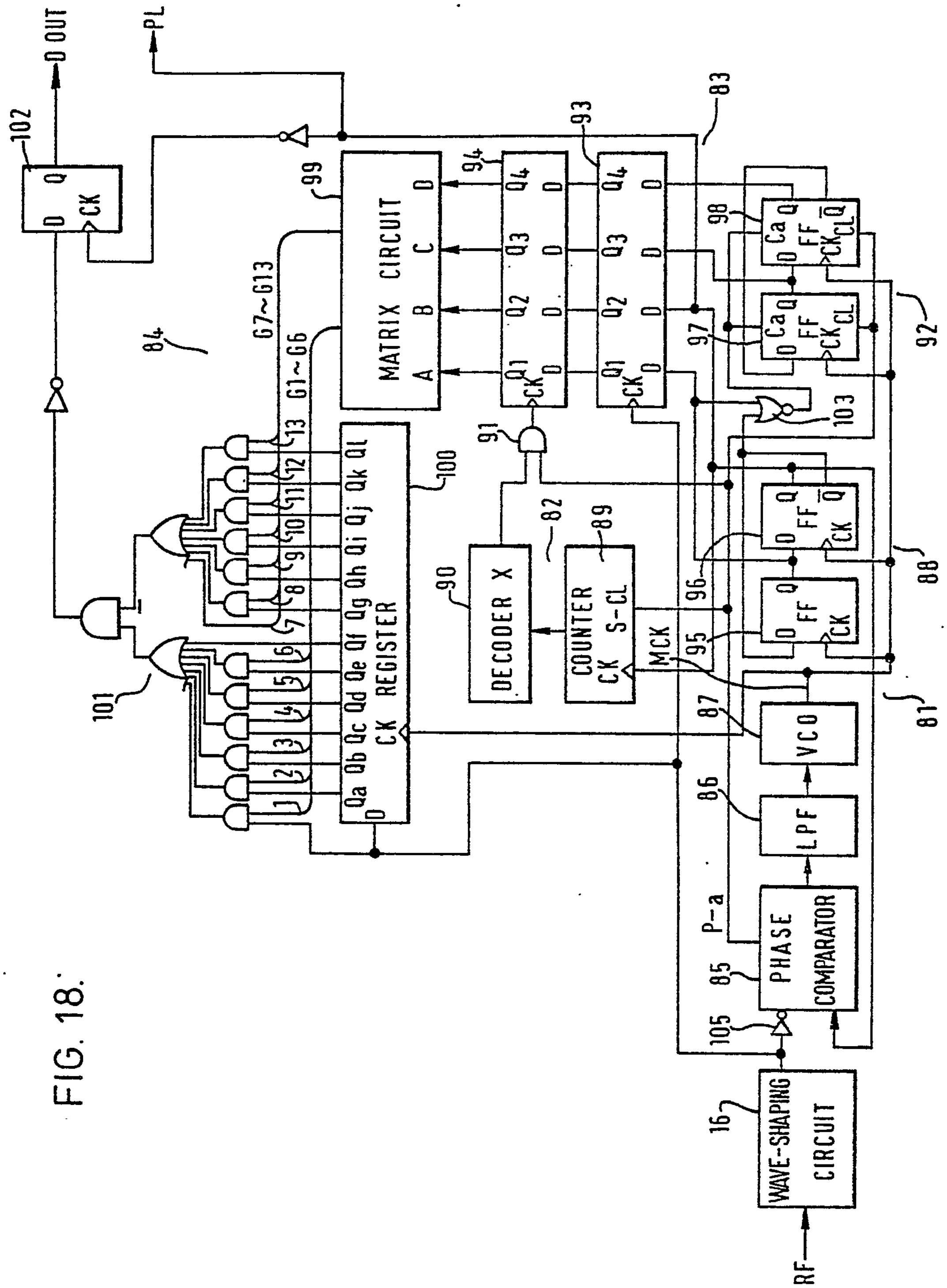
D OUT
PL
102
D Q
CK
101
84
G7~G13
G1~G6
99
MATRIX CIRCUIT
A B C D
94
Q1 Q2 Q3 Q4
CK
D D D D
93
83
100
Qa Qb Qc Qd Qe Qf Qg Qh Qi Qj Qk Ql
CK REGISTER
91
90
DECODER X
82
89
COUNTER
CK S-CL
MCK
95
96
97
98
103
92
88
81
FF
Ca
CL
87
VCO
86
LPF
P-a
85
PHASE
COMPARATOR
105
16
WAVE-SHAPING
CIRCUIT
RF
FIG. 18.